# FASCICULE DE BREVET EUROPEEN

(11) **EP 4 584 718 B1**
(45) Date de publication et mention de la délivrance du brevet: **11.11.2026**
(21) Numéro de dépôt: 24748564.2
(22) Date de dépôt: 19.07.2024
(51) Int. Cl.: G06N 3/0464, G06N 3/048, G06N 3/063, G06N 3/084, G06N 3/10

(54) **DISPOSITIF DE TRAITEMENT DE DONNÉES EMBARQUÉ DANS UN ENGIN SPATIAL**
BORDDATENVERARBEITUNGSVORRICHTUNG IN EINEM RAUMFAHRZEUG
ONBOARD DATA PROCESSING DEVICE IN A SPACECRAFT

(30) Priorité: 21.07.2023 FR 2307722
(43) Date de publication de la demande: 16.07.2025
(73) Titulaire: Airbus Defence and Space SAS, 31402 Toulouse Cedex 4 (FR)
(72) Inventeur: BROCHARD, Roland, 31402 TOULOUSE cedex 4 (FR)
(74) Mandataire: Santarelli
(86) Numéro de dépôt international: PCT/EP2024/070523
(87) Numéro de publication internationale: WO 2025/021676

(56) Documents cités:
- VASILEIOS LEON: "From Circuits to SoC Processors: Arithmetic Approximation Techniques & Embedded Computing Methodologies for DSP Acceleration", ARXIV.ORG, CORNELL UNIVERSITY LIBRARY, 201 OLIN LIBRARY CORNELL UNIVERSITY ITHACA, NY 14853, 23 February 2023 (2023-02-23), XP091445269, DOI: 10.26240/HEAL.NTUA.24738
- IMANI MOHSEN ET AL: "CADE: Configurable Approximate Divider for Energy Efficiency", 2019 DESIGN, AUTOMATION & TEST IN EUROPE CONFERENCE & EXHIBITION (DATE), EDAA, 25 March 2019 (2019-03-25), pages 586 - 589, XP033550186, DOI: 10.23919/DATE.2019.8715112
- CHENG TAIYU ET AL: "Logarithm-approximate floating-point multiplier is applicable to power-efficient neural network training", INTEGRATION, THE VLSI JOURNAL, NORTH-HOLLAND PUBLISHING COMPANY. AMSTERDAM, NL, vol. 74, 14 May 2020 (2020-05-14), pages 19 - 31, XP086172669, ISSN: 0167-9260, [retrieved on 20200514], DOI: 10.1016/J.VLSI.2020.05.002
- KAHALI SAYAN ET AL: "Low-Power Lossless Image Compression on Small Satellite Edge using Spiking Neural Network", 2023 INTERNATIONAL JOINT CONFERENCE ON NEURAL NETWORKS (IJCNN), IEEE, 18 June 2023 (2023-06-18), pages 1 - 8, XP034387247, DOI: 10.1109/IJCNN54540.2023.10191704

## Description

### 1. DOMAINE TECHNIQUE

Le domaine de l'invention est celui des réseaux de neurones mis en œuvre dans des engins spatiaux, notamment les satellites et les sondes spatiales.

L'invention se rapporte plus particulièrement à un dispositif de traitement de données, embarqué dans un engin spatial et comprenant une machine de calcul, dédiée (par exemple un FPGA, « Field-Programmable Gate Array » ou un ASIC « application-specific integrated circuit ») ou reprogrammable (par exemple un processeur), configurée pour mettre en œuvre un réseau de neurones.

L'invention s'applique notamment, mais non exclusivement, au cas où un réseau de neurones mis en œuvre dans un engin spatial est utilisé pour une application de compression de données.

La présente invention n'est pas limitée à cette application particulière et présente un intérêt pour toutes les applications embarquées dans les engins spatiaux tels que les satellites (aussi appelées « applications spatiales embarquées ») et basées sur l'utilisation d'un réseau de neurones.

Le document *«* From Circuits to SoC Processors : Arithmetic Approximation Techniques & Embedded Computing Methodologies for DSP Acceleration », VASILEIOS LEON, CORNELL UNIVERSITY LIBRARY, 23 février 2023, divulgue des solutions et des méthodologies de conception, basées sur des paradigmes informatiques tels que tels que le calcul approximatif, l'accélération matérielle et le calcul hétérogène, pour le développement d'accélérateurs DSP et IA à faible consommation d'énergie.

### 2. ARRIÈRE-PLAN TECHNOLOGIQUE

Les réseaux de neurones sont de plus en plus largement répandus et utilisés dans des applications de plus en plus variées, par exemple sous les désignations d'intelligence artificielle ou d'apprentissage automatique (« machine learning » en anglais). La compression de données et l'analyse d'image sont deux exemples d'applications pouvant être mises en œuvre en utilisant des réseaux de neurones. Les réseaux de neurones peuvent être par exemple des réseaux de neurones profonds (également désignés en anglais par DNN, pour « Deep Neuronal Network ») ou des réseaux de neurones à convolution (également désignés en anglais par CNN pour « Convolutional Neuronal Network »).

Du fait de leur complexité, les réseaux de neurones actuels nécessitent de plus en plus de ressources (puissance de calcul et énergie électrique notamment), en particulier pour les phases d'apprentissage qui impliquent de nombreux calculs, ce qui exclut généralement leur utilisation dans les applications spatiales embarquées.

Le brevet US 2020/082269 intitulé « Memory efficient neural networks » et déposé au nom de NVIDIA CORPORATION enseigne une méthode dans laquelle les paramètres de poids sont convertis d'une première représentation de valeur à virgule flottante en une seconde représentation de valeur à virgule flottante présentant un nombre de bit réduit. Une telle méthode ne permet cependant qu'une réduction marginale des besoins en puissance de calcul.

De plus, les réseaux de neurones disponibles apparaissent, pour leurs utilisateurs, comme des « boîtes noires », c'est-à-dire des modules dont le fonctionnement interne est soit inaccessible, soit délibérément caché par le fournisseur, si bien que l'on ne peut étudier que leurs interactions. Il est donc très problématique d'intégrer dans un engin spatial un réseau de neurones dont le comportement et les performances ne peuvent être analysés qu'à partir des données reçues au sol depuis cet engin spatial.

### 3. RÉSUMÉ

L'invention est exposée dans le jeu de revendications joint.

La présente invention vise à remédier à tout ou partie des inconvénients de l'art antérieur.

A cet effet, selon un premier aspect, la présente invention vise un dispositif de traitement de données, embarqué dans un engin spatial et comportant un moyen de communication avec un dispositif au sol et une machine de calcul, configurée pour mettre en œuvre un réseau de neurones recevant, en entrée, des données d'entrée et générant, en sortie, au moins une donnée de sortie, le réseau de neurones comportant une pluralité de couches, un neurone d'une couche donnée étant déterminé en fonction d'au moins une valeur amont multipliée par un poids, la machine de calcul comportant une unité de traitement et un espace mémoire stockant des données représentatives du réseau de neurones.

La machine de calcul est configurée pour effectuer des opérations de multiplication et de division dites « lentes », consommant une première puissance de calcul et une première quantité d'énergie électrique, et des opérations de multiplication et de division déterministes dites « rapides », consommant une deuxième puissance de calcul inférieure à la première puissance de calcul et/ou une deuxième quantité d'énergie électrique inférieure à la première quantité d'énergie électrique, opérations rapides dont le résultat possède, en fonction des nombres sur lesquels portent une opération rapide, une précision inférieure ou égale à l'opération lente correspondante.

La machine de calcul est configurée pour effectuer au moins une phase d'apprentissage du réseau de neurones, chaque phase d'apprentissage comportant un réglage des données représentatives du réseau de neurones par un algorithme itératif mettant en œuvre des données d'apprentissage, chaque itération de l'algorithme itératif comportant des calculs d'inférence suivis de calculs de descente de gradient, lesdits calculs d'inférence utilisant au moins une opération de division déterministe rapide.

Le moyen de communication avec le dispositif au sol est configuré pour transmettre au dispositif au sol et/ou recevoir du dispositif au sol des données d'apprentissage.

Le dispositif de traitement de données permet ainsi, d'une part, d'adapter la puissance de calcul et l'énergie électrique nécessaires pour ladite au moins une phase d'apprentissage à bord de l'engin spatial et, d'autre part, de mettre en œuvre, dans le dispositif au sol, un autre réseau de neurones identique au réseau de neurones embarqué.

Ainsi, en réalisant au moins certaines des opérations de division selon un calcul rapide (se substituant à un calcul lent classique) et, éventuellement, au moins certaines des opérations de multiplication selon un calcul rapide (se substituant à un calcul lent classique), on réduit les ressources nécessaires à ces opérations, en particulier pour les phases d'apprentissage qui impliquent de nombreux calculs. Notamment la puissance de calcul, c'est-à-dire la quantité de calculs effectués par unité de temps, augmente à consommation de ressources fixe. Ces ressources sont généralement l'énergie et le nombre de portes logiques (ou de LUT sur un FPGA). C'est en particulier le nombre de portes qui est drastiquement réduit pour la division. Ceci permet au réseau de neurones d'être exécuté dans l'engin spatial, et donc d'être utilisé dans les applications spatiales embarquées. En d'autres termes, la présente invention permet d'améliorer l'embarquabilité (y compris pour la ou les phases d'apprentissage) du réseau de neurones dans l'engin spatial (tel qu'un satellite).

Par ailleurs, le fait que le calcul rapide d'opérations de division et, éventuellement, d'opérations de multiplication sont tous les deux déterministes permet de mettre en œuvre, dans un autre dispositif de traitement de données au sol, un autre réseau de neurones identique au réseau de neurones embarqué dans l'engin spatial.

En d'autres termes, la présente invention permet une reproductibilité au sol, notamment pour chaque phase d'apprentissage, du réseau de neurones embarqué dans l'engin spatial. On peut donc reproduire au sol le comportement du réseau de neurones embarqué et en étudier le comportement et les performances. Ceci permet par exemple une interprétation exacte, dans un équipement au sol, de données de télémétrie transmises par un engin spatial. Ainsi, si une application spatiale embarquée utilise un premier réseau de neurones mis en œuvre dans un engin spatial, on dispose au sol d'un équipement capable de mettre en œuvre un deuxième réseau de neurones identique au premier, avec notamment les mêmes résultats d'apprentissage. Or les ressources matérielles dont on dispose au sol comportent une puissance de calcul et des ressources électriques plus importantes que celles disponibles dans l'engin spatial.

Par exemple, dans le cas où l'application spatiale embarquée est une application de compression de données utilisant un premier réseau de neurones fournissant un signal de prédiction à un module de compression également exécuté dans l'engin spatial et générant des données compressées, on est capable d'exécuter au sol une application de décompression de données utilisant un deuxième réseau de neurones identique au premier et fournissant le même signal de prédiction à un module de décompression également exécuté au sol et générant des données décompressées à partir des données compressées reçues de l'engin spatial.

Dans un autre exemple, pour une application spatiale embarquée, on réexécute dans un équipement au sol l'application spatiale embarquée qui est exécutée dans l'engin spatial, pour vérifier au sol que tout se passe correctement dans l'engin spatial. Ceci permet un gain en autonomie de l'application spatiale embarquée, tout en réalisant une supervision au sol, par exemple pour s'assurer que l'apprentissage du réseau de neurones exécuté dans l'engin spatial ne diverge pas.

Dans des modes de réalisation, la machine de calcul est configurée pour que les calculs de descente de gradient utilisent des opérations de multiplication déterministes rapides et des opérations de division déterministes rapides.

Les avantages de la mise en œuvre de l'invention, rappelés ci-dessus, couvrent ainsi non seulement aux calculs d'inférence, mais aussi aux calculs de descente de gradient.

Dans des modes de réalisation, le dispositif de traitement de données embarqué comporte, de plus, un module d'évaluation de performance configuré pour, d'une part, mémoriser une configuration du réseau de neurones ayant une performance mesurée déterminée à une date déterminée et, d'autre part, mesurer la performance du réseau de neurones obtenu par réglage de ses données représentatives par une phase d'apprentissage, et comparer la performance mémorisée avec la performance mesurée, la machine de calcul étant configurée pour faire revenir le réseau de neurones à la configuration du réseau mémorisée si la performance mesurée de la configuration du réseau réglée par une phase d'apprentissage est inférieure à la performance de la configuration du réseau mémorisée.

Ainsi, si les performances du réseau de neurones décroissent, par exemple du fait de l'utilisation d'opérations rapides, la configuration la plus performante du réseau de neurones est restaurée.

Dans des modes de réalisation, la machine de calcul est configurée pour que chacune des opérations de division rapides réalisées, pour deux nombres mémorisés D et F, correspond à : $\left({S}_{D}\times {S}_{F}\right) \times \left(1+{M}_{D}-{M}_{F}\right) \times {2}^{{E}_{D} - {E}_{F}}$ où S_{D} est le signe de D, S_{F} est le signe de F, M_{D} est la mantisse de D, M_{F} est la mantisse de F, E_{D} est l'exposant de D, et E_{F} est l'exposant de F, mantisse et exposant étant définis dans une base déterminée.

Ce calcul rapide est déterministe en ce qu'il permet de travailler sur une arithmétique entière pour réaliser une division rapide. En outre dans le cas d'un grand nombre de divisions lentes classiques réalisées sur une arithmétique flottante, la gestion des arrondis peut s'avérer non déterministe par exemple lorsqu'on utilise un calculateur du commerce de type CPU ou GPU.

Dans des modes de réalisation, la machine de calcul est configurée pour que chacune des opérations de multiplication rapides réalisées, pour deux nombres mémorisés A et B, correspond à : $\left({S}_{A}\times {S}_{B}\right) \times \left(1+{M}_{A}+{M}_{B}\right) \times {2}^{{E}_{A} + {E}_{B} ∓ 2 C}$ les deux nombres mémorisés A et B étant décomposés comme suit : $A = {S}_{A} \times \left(1+{M}_{A}\right) \times {2}^{{E}_{A} ∓ C}$ $B = {S}_{B} \times \left(1+{M}_{B}\right) \times {2}^{{E}_{B} ∓ C}$ où S_{A} est le signe de A, S_{B} est le signe de B, M_{A} est la mantisse de A, M_{B} est la mantisse de B, E_{A} est l'exposant de A, E_{B} est l'exposant de B, et C est un biais utilisé dans la décomposition en signe, mantisse et exposant étant définis dans une base déterminée.

Ce calcul rapide est déterministe en ce qu'il permet de travailler sur une arithmétique entière pour réaliser une multiplication rapide. En outre dans le cas d'un grand nombre de multiplications lentes classiques réalisées sur une arithmétique flottante, la gestion des arrondis peut s'avérer non déterministe par exemple lorsqu'on utilise un calculateur du commerce de type CPU ou GPU.

Par exemple, la base est déterminée, par le standard IEEE 754-2008.

Dans des modes de réalisation, la machine de calcul est configurée pour que toutes les opérations de division comprises dans lesdits calculs d'inférence et de descente de gradient soient des opérations de division rapides, sauf les opérations de division comprises dans l'exécution de la fonction *Softmax* pour une couche finale du réseau de neurones.

Ainsi, on bénéficie autant que possible des avantages de la mise en œuvre de la présente invention, avec des calculs rapides. En revanche, pour les opérations de division comprises dans l'exécution de la fonction Softmax, on utilise le calcul lent classique pour éviter d'aboutir à un apprentissage, ou entraînement, rapidement instable dans la plupart des cas. Cette instabilité est due au fait que l'erreur est retro-propagée à travers la dernière couche. Dans cette dernière couche du réseau de neurones, s'effectue la fonction Softmax dont la sortie est une distribution de probabilités sur un ensemble fini de classes, qui couvre les problèmes de classification mais aussi la modélisation statistique de données, par exemple dans le cadre d'un algorithme de compression. Couplé au fait que cette dernière couche utilise des fonctions exponentielles, l'erreur induite est non linéaire et ne se moyenne pas quand on la rétro-propage dans les autres couches, contrairement à la multiplication rapide utilisée lors des calculs d'inférence, dont les erreurs se moyennent très bien.

Dans des modes de réalisation, la machine de calcul est configurée pour que toutes les opérations de multiplication comprises dans lesdits calculs d'inférence et de descente de gradient soient des opérations de multiplication rapides.

Ces modes de réalisation utilisent autant que possible le calcul rapide au lieu du calcul lent classique pour les opérations de multiplication.

Dans des modes de réalisation, lesdites données d'entrée sont des données brutes constituées de symboles et dans lequel ladite au moins une donnée de sortie est représentative d'une prédiction d'une occurrence des symboles, ladite au moins une donnée de sortie étant fournie à un module, implémenté à bord de l'engin spatial, de compression entropique desdites données brutes.

Cette implémentation particulière correspond au cas où le réseau de neurones mis en œuvre dans l'engin spatial est utilisé pour une application de compression de données. On rappelle cependant que la présente invention n'est pas limitée à cette application spatiale embarquée particulière et présente un intérêt pour toutes les applications spatiales embarquées qui sont basées sur l'utilisation d'un réseau de neurones.

Dans des modes de réalisation, la machine de calcul est configurée pour fonctionner selon un premier mode de fonctionnement correspondant aux phases d'apprentissage et selon un second mode de fonctionnement correspondant à des calculs d'inférences sans apprentissage, des multiplications rapides et des divisions rapides étant utilisées dans ces deux modes de fonctionnement.

Les avantages de la mise en œuvre de l'invention s'étendent ainsi aux deux modes de fonctionnement.

Dans des modes de réalisation, la machine de calcul est configurée pour que chaque valeur portée par un des neurones et chaque facteur de pondération associé à une transmission d'une valeur d'un neurone à l'autre, soient codés sur un même nombre de données binaires, dans un même format sous la forme d'un nombre à virgule flottante.

Par exemple, ce nombre à virgule flottante peut comporter 32 données binaires (« bits ») avec virgule flottante ou 16bits par exemple pour des applications embarquées (notamment du type calculateur pour applications robotiques).

Dans des modes de réalisation, le réseau de neurones est configuré pour être réglé par un apprentissage initial avant le lancement de l'engin spatial.

Selon un deuxième aspect, la présente invention vise un système de traitement de données pour une application spatiale comportant un dispositif de traitement de données embarqué dans un engin spatial objet de la présente invention et tel que succinctement exposé ci-dessus et un dispositif de traitement au sol dans une installation au sol comportant un moyen de communication avec le moyen de communication de l'engin spatial, le dispositif de traitement de données au sol comportant une machine de calcul identique à la machine de calcul embarquée.

Dans des modes de réalisation, la machine de calcul au sol comporte, de plus, un module d'évaluation de performance configuré pour, d'une part, mémoriser une configuration du réseau de neurones au sol ayant une performance mesurée déterminée à une date déterminée et, d'autre part, mesurer la performance du réseau de neurones au sol obtenu par réglage de ses données représentatives par une phase d'apprentissage, et comparer la performance mémorisée avec la performance mesurée, la machine de calcul étant configurée pour faire revenir le réseau de neurones au sol et le réseau de neurones embarqué à la configuration du réseau mémorisée si la performance mesurée de la configuration du réseau réglée par une phase d'apprentissage est inférieure à la performance de la configuration du réseau mémorisée.

Ainsi, l'évaluation de performance du réseau de neurones peut être réalisée au sol et, si les performances du réseau de neurones décroissent, par exemple du fait de l'utilisation d'opérations rapides, la configuration la plus performante du réseau de neurones au sol et du réseau de neurones embarqué est restaurée.

Selon un troisième aspect, la présente invention vise un procédé de traitement de données à bord d'un engin spatial comportant une étape de communication avec un dispositif au sol et une étape de calcul mettant en œuvre un réseau de neurones recevant, en entrée, des données d'entrée et générant, en sortie, au moins une donnée de sortie, le réseau de neurones comportant une pluralité de couches, un neurone d'une couche donnée étant déterminé en fonction d'au moins une valeur amont multipliée par un poids, l'étape de calcul mettant aussi en œuvre un espace mémoire stockant des données représentatives du réseau de neurones.

Les calculs comportent des opérations de multiplication et de division dites « lentes », consommant une première puissance de calcul et une première quantité d'énergie électrique, et des opérations de multiplication et de division déterministes dites « rapides », consommant une deuxième puissance de calcul inférieure à la première puissance de calcul et/ou une deuxième quantité d'énergie électrique inférieure à la première quantité d'énergie électrique, opérations rapides dont le résultat possède, en fonction des nombres sur lesquels portent une opération rapide, une précision inférieure ou égale à l'opération lente correspondante.

L'étape de calcul comporte au moins une phase d'apprentissage du réseau de neurones, chaque phase d'apprentissage comportant un réglage des données représentatives du réseau de neurones par un algorithme itératif mettant en œuvre des données d'apprentissage, chaque itération de l'algorithme itératif comportant des calculs d'inférence suivis de calculs de descente de gradient, lesdits calculs d'inférence utilisant au moins une opération de division déterministe rapide.

L'étape de communication avec le dispositif au sol transmet au dispositif au sol et/ou recevant du dispositif au sol des données d'apprentissage.

Le procédé de traitement de données permet ainsi, d'une part, d'adapter la puissance de calcul et l'énergie électrique nécessaires pour ladite au moins une phase d'apprentissage à bord de l'engin spatial et, d'autre part, de mettre en œuvre, dans le dispositif au sol, un autre réseau de neurones identique au réseau de neurones embarqué.

Les avantages, buts et caractéristiques particulières de ce procédé étant similaires à ceux du dispositif objet de l'invention, ils ne sont pas rappelés ici.

### 4. LISTE DES FIGURES

D'autres buts, caractéristiques et avantages de l'invention apparaîtront à la lecture de la description suivante, donnée à titre d'exemple illustratif et non limitatif, en relation avec les dessins annexés, dans lesquels :
[Fig. 1] représente un exemple de réseau de neurones selon une première structure connue ;
[Fig. 2] représente un autre exemple de réseau de neurones selon une deuxième structure connue ;
[Fig. 3] illustre un exemple d'engin spatial selon un mode de réalisation particulier de l'invention, embarquant un dispositif de traitement de données mettant en œuvre un algorithme de compression composé d'un module de codage entropique et d'un modèle statistique des symboles sous la forme d'un réseau de neurones;
[Fig. 4] illustre un exemple de structure du dispositif de traitement de données de la [Fig. 3], selon un mode de réalisation particulier de l'invention ;
[Fig. 5] illustre un exemple de réalisation de l'apprentissage du réseau de neurones mis en œuvre par le dispositif de traitement de données de la [Fig. 3] ;
[Fig. 6] illustre un codage entropique ;
[Fig. 7a] représente un exemple de procédé selon l'invention ;
[Fig. 7b] illustre un exemple de traitements mis en œuvre dans la première fonction de combinaison selon l'invention;
[Fig. 7c] illustre les propriétés de continuité, de monotonicité et de différentiabilité de la première fonction de combinaison selon l'invention ;
[Fig. 8a] illustre une photo de la surface de la lune ;
[Fig. 8b] illustre des zones de la photo de la [Fig. 8a] susceptibles de servir à l'alunissage d'un engin spatial, les zones en question ayant été classifiées comme telles par un réseau entrainé selon l'invention ;
[Fig. 8c] illustre un exemple de performances de classification obtenues dans le contexte de la détection de zones caractéristiques sur une photo avec un réseau de neurones mis en œuvre selon l'invention ;
[Fig. 9a] illustre une photo bruitée d'un terrain de sport ;
[Fig. 9b] illustre le résultat du débruitage de la photo de la [Fig. 9a] par un réseau de neurones entrainé selon l'invention, où l'inférence se fait également selon l'invention ;
[Fig. 9c] illustre le résultat du débruitage de la photo de la [Fig. 9a] par un réseau de neurones entrainé pour moitié selon l'invention et pour moitié à l'aide d'une multiplication lente classique, l'inférence se faisant selon l'invention ;
[Fig. 9d] illustre le résultat du débruitage de la photo de la [Fig. 9a] par un réseau de neurones entraîné à l'aide d'une multiplication lente classique, l'inférence se faisant également à l'aide d'une multiplication lente classique (cas témoin) ;
[Fig. 10a] représente un détail de la [Fig. 9a] ;
[Fig. 10b] représente un détail de la [Fig. 9b] ;
[Fig. 10c] représente un détail de la [Fig. 9c] ;
[Fig. 10d] représente un détail de la [Fig. 9d] ;
[Fig. 11a] illustre une photo bruitée d'une route ;
[Fig. 11b] illustre le résultat du débruitage de la photo de la [Fig. 11a] par un réseau de neurones utilisant une multiplication lente classique pour l'apprentissage et pour l'inférence (cas témoin) ;
[Fig. 11c] illustre le résultat du débruitage de la photo de la [Fig. 11a] par un réseau de neurones mis en œuvre selon l'invention, pour l'apprentissage et pour l'inférence ;
[Fig. 11d] illustre le résultat du débruitage de la photo de la [Fig. 11a] par un réseau de neurones entrainé pour moitié selon l'invention et pour moitié à l'aide d'une multiplication lente classique, l'inférence se faisant selon l'invention ;
[Fig. 12a] représente un détail de la [Fig. 11a] ;
[Fig. 12b] représente un détail de la [Fig. 11b] ;
[Fig. 12c] représente un détail de la [Fig. 11c] ;
[Fig. 12d] représente un détail de la [Fig. 11d] ;
[Fig. 13] illustre un exemple d'évolution de la fonction de perte obtenue lors de l'apprentissage selon l'invention d'un réseau de neurones, dans le contexte du débruitage d'image ; et
[Fig. 14] représente un système de dispositifs de traitement de données pour une application spatiale comportant un dispositif de traitement embarqué dans un engin spatial et un dispositif de traitement au sol.

### 5. DESCRIPTION DÉTAILLÉE

Sur toutes les figures du présent document, les éléments et étapes identiques sont désignés par une même référence numérique.

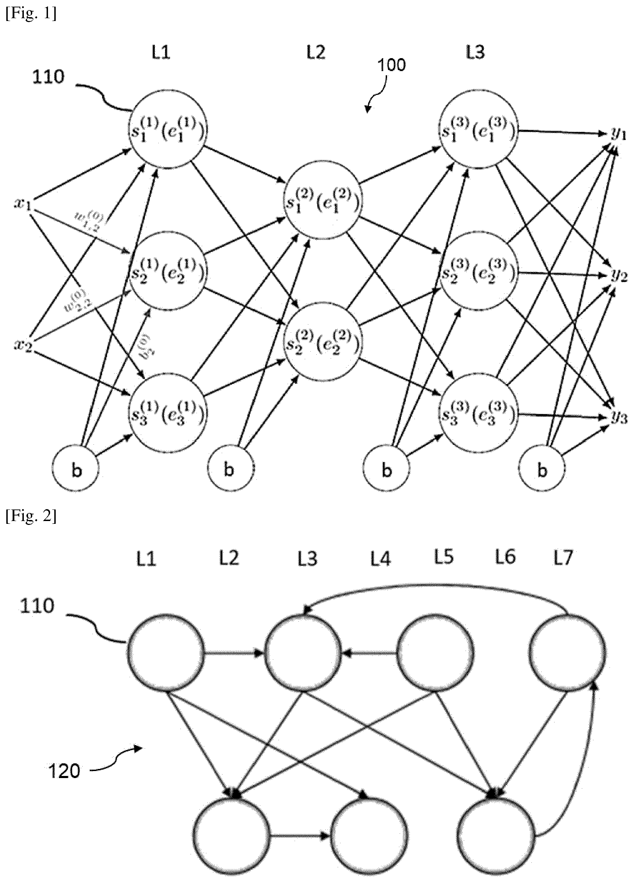

La **[****Fig. 1****]** représente un réseau 100 de neurones du type « feedforward », pouvant par exemple être mis en œuvre par le dispositif et le procédé objets de l'invention. La portée de l'invention ne se limite nullement à ce type de réseau de neurones, l'invention pouvant par exemple être appliquée à des réseaux de neurones profonds, également désignés par DNN (acronyme de Deep Neuronal Network), des réseaux de neurones à convolution, également désignés par CNN (acronyme de Convolution Neuronal Network) dans lequel les couches définissent au moins un premier bloc, en entrée, d'extraction de caractéristiques et un deuxième bloc, en sortie.

Le réseau de neurones peut également comprendre des couches denses. Le réseau de neurones peut également être du type réseau de convolution profond, également désigné par DCN (acronyme de Deep Convolution Network). Le réseau de neurones peut également être du type récurrent, également désigné par RNN (acronyme de Recurrent Neural Network), ou du type machine de Boltzmann restreinte, également désignée par RBM (acronyme de Restricted Boltzmann Machine), unité de mémoire à long-court terme, également désignée par LSTM (acronyme de Long Short-Term Memory), unité récurrente à porte, également désignée par GRU (acronyme de Gated Recurrent Unit), ou carte autoadaptative, également désignés par SOM (acronyme de Self Organizing Maps).

Le réseau de neurones peut notamment utiliser un certain nombre de liaisons vers l'avant ou vers l'arrière avec une pondération et une fonction d'activation. Dans un autre exemple, le réseau de neurones peut inclure une fonctionnalité pour effectuer un regroupement, une analyse en composantes principales, également désignée par PCA (acronyme de Principal Component Analysis), une analyse sémantique latente, également désignée par LSA (acronyme de Latent Semantic Analysis), et/ou une autre technique d'apprentissage non supervisée. Le réseau de neurones peut également implémenter la fonctionnalité d'un modèle de régression, d'une machine à vecteurs de support, d'un arbre de décision, d'une forêt aléatoire, d'un arbre à gradient amplifié, d'un classificateur naïf de Bayes, d'un réseau bayésien, d'un modèle hiérarchique et/ou d'un modèle d'ensemble.

Le réseau 100 est un graphe orienté de nœuds, appelés neurones 110, disposés en couches L1, L2, L3 successives sur la [Fig. 1]. Chaque neurone 110 d'une couche donnée reçoit une information d'un ou plusieurs neurones 110, par exemple de la couche précédente, et combine cette information selon des pondérations identifiées sur la [Fig. 1] par les termes ${w}_{k , j}^{\left(i-1\right)}$ (si l'on se réfère au j-ème neurone de la i-ème couche, le terme ${w}_{k , j}^{\left(i-1\right)}$ venant pondérer la k-ème valeur d'entrée du j-ème neurone en question). Chaque neurone 110 possède par exemple un seuil d'activation *bⱼ*. Sur la [Fig. 1], la sortie du j-ème neurone 110 de la i-ème couche est exprimée comme une fonction ${s}_{j}^{\left(i\right)} \left({e}_{j}^{\left(i\right)}\right)$ de son entrée ${e}_{j}^{\left(i\right)}$. Les paramètres que sont les pondérations et les seuils d'activation sont optimisés en pratique lors d'une phase d'apprentissage du réseau 100 sur un ensemble de données d'apprentissage.

Par exemple, pour les entrées d'un ensemble d'apprentissage donné, les résultats théoriques en sortie du réseau sont connus. Une optimisation consiste, par exemple, à minimiser la somme des carrés des différences entre les sorties calculées *yₖ* et les sorties attendues pour des valeurs d'entrées données *xₖ*. Pour des applications notamment de classification et de compression, on utilise par exemple l'entropie croisée.

Le réseau 100 de neurones de la [Fig. 1] est du type « feed-forward » selon la terminologie anglo-saxonne, où chaque couche alimente la suivante, tandis qu'un réseau récurrent autorise des boucles. Un tel réseau 100 propage l'entrée du réseau vers les couches suivantes sans jamais revenir en arrière.
Le réseau 120 de neurones de la **[****Fig. 2****]** comprend des boucles de rétroaction entre les différentes couches L1, ..., L7. Plus particulièrement, certains neurones 110 reçoivent ici une information de leurs successeurs (c'est-à-dire des neurones 110 de la couche suivante selon le sens de propagation de l'information de l'entrée du réseau 120 vers la sortie du réseau 120) et combinent cette information selon des pondérations correspondantes. Par ailleurs, certains neurones 110 reçoivent ici également une information de prédécesseurs appartenant à une couche précédente (par exemple, un neurone de la couche L6 reçoit ici une information telle que délivrée par un neurone de la couche L3) et combinent cette information selon des pondérations correspondantes. De manière plus générale, le procédé selon l'invention peut s'appliquer à de nombreux types de réseaux de neurones.

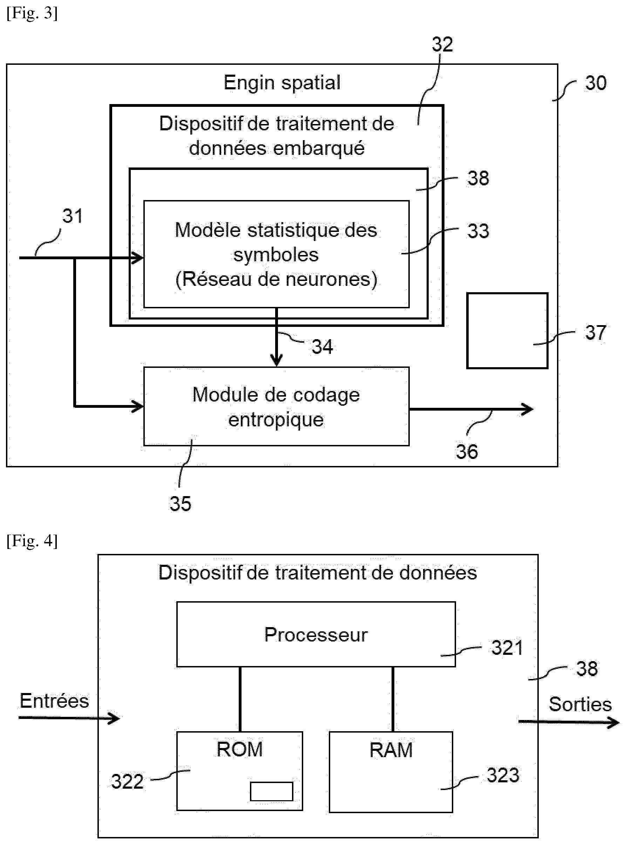

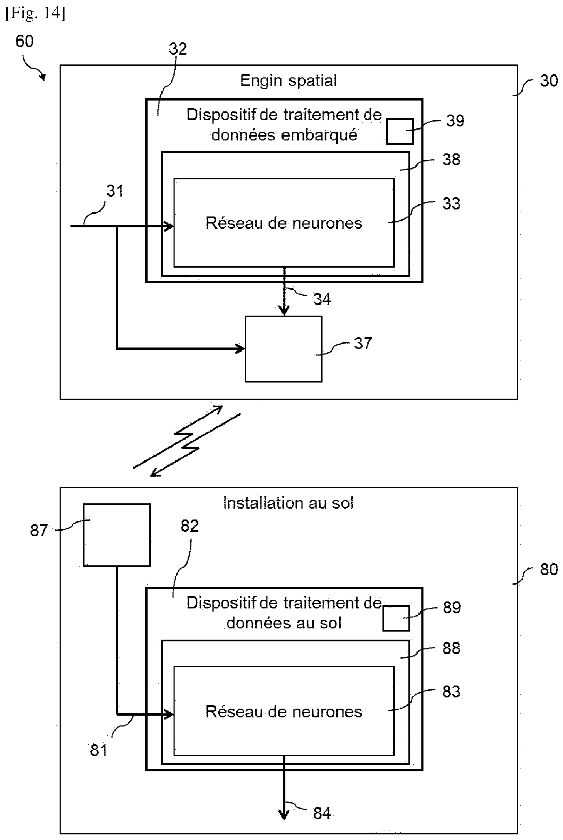

Comme illustré en **[****Fig. 3****],** pour la mise en œuvre de l'invention, un engin spatial 30 comporte un dispositif de traitement de données 32 comportant un moyen de communication 37 avec un dispositif au sol (voir [Fig. 14]) et une machine de calcul 38 illustrée en **[****Fig. 4****].** Dans l'exemple de la [Fig. 3], le réseau de neurones 33 met en œuvre, de manière non limitative, un modèle statistique des symboles utilisé en combinaison avec le module de codage entropique 35, afin de réaliser une compression de données.

On présente désormais, en relation avec la [Fig. 4] un exemple de machine de calcul 38 permettant de mettre en œuvre un réseau de neurones avec au moins une opération de division rapide et générant des sorties en fonction de ses entrées. La machine de calcul comporte, par exemple, une mémoire vive 323 (par exemple une mémoire RAM), une unité de traitement 321, équipée par exemple d'un (ou plusieurs) processeur(s), et pilotée par un programme d'ordinateur stocké dans une mémoire morte 322 (par exemple une mémoire ROM ou un disque dur). A l'initialisation, les instructions de code du programme d'ordinateur sont par exemple chargées dans la mémoire vive 323 avant d'être exécutées par le processeur de l'unité de traitement 321. La machine de calcul 38 comprend par exemple, sans limitation, une interconnexion (bus) qui connecte une ou plusieurs unités de traitement, une ou plusieurs interfaces d'entrée/sortie couplée à une ou plusieurs entrées/sorties et la mémoire. Les instructions peuvent être exécutées par exemple à l'aide d'une machine de calcul reprogrammable.

L'unité ou les unités de traitement peuvent être n'importe quel processeur approprié mis en œuvre comme une unité centrale de traitement (CPU), une unité de traitement graphique (GPU), un processeur de traitement du signal (DSP), un microcontrôleur, un circuit intégré spécifique à l'application (ASIC) ou un réseau de portes programmable (FPGA).

Dans le cas où le dispositif 32 est réalisé au moins en partie avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB) ou non, ce médium de stockage étant lisible partiellement ou totalement par un ordinateur ou un processeur. Ce programme pourra comprendre notamment un jeu d'instructions pour la mise en œuvre d'un réseau de neurones selon l'invention où l'exécution d'un opérateur de division de deux nombres mémorisés D et F correspond à : $\left({S}_{D}\times {S}_{F}\right) \times \left(1+{M}_{D}-{M}_{F}\right) \times {2}^{{E}_{D} - {E}_{F}}$ où :
- S_{D} est le signe de D ;
- S_{F} est le signe de F ;
- M_{D} est la mantisse de D ;
- M_{F} est la mantisse de F ;
- E_{D} est l'exposant de D et
- E_{F} est l'exposant de F.

Dans certains modes de réalisation, selon le jeu d'instructions, l'exécution d'un opérateur de multiplication des deux nombres mémorisés A et B correspond à : $\left({S}_{A}\times {S}_{B}\right) \times \left(1+{M}_{A}+{M}_{B}\right) \times {2}^{{E}_{A} + {E}_{B} ∓ 2 C}$ les deux nombres mémorisés A et B étant décomposés comme suit : $A = {S}_{A} \times \left(1+{M}_{A}\right) \times {2}^{{E}_{A} ∓ C}$ $B = {S}_{B} \times \left(1+{M}_{B}\right) \times {2}^{{E}_{B} ∓ C}$ où :
- S_{A} est le signe de A ;
- S_{B} est le signe de B ;
- M_{A} est la mantisse de A ;
- M_{B} est la mantisse de B ;
- E_{A} est l'exposant de A ;
- E_{B} est l'exposant de B ; et
- C est un biais utilisé dans la décomposition en signe, mantisse et exposant dans une base déterminée.

Les instructions peuvent être standards, comme par exemple le langage C, ou spécifiques au microprocesseur ou au calculateur qui les exécutent.

En exécutant un programme informatique conservé dans l'espace mémoire des mémoires 322 et 323, la machine de calcul 38 met en œuvre le réseau de neurones 33 recevant, en entrée, des données d'entrée 31 et générant, en sortie, au moins une donnée de sortie 34. Comme exposé en regard de la [Fig. 1] et de la [Fig. 2], le réseau de neurones 33 comporte une pluralité de couches, un neurone 110 d'une couche donnée étant déterminé en fonction d'au moins une valeur amont multipliée par un poids. La mémoire vive 323 stocke des données représentatives du réseau de neurones 33.

Dans le cas particulier illustré en figure 1, un module de compression de données 35 est aussi embarqué dans l'engin spatial 30. La machine de calcul 38 est configurée pour effectuer des opérations de multiplication et de division dites « lentes », consommant une première puissance de calcul et une première quantité d'énergie électrique. Ces opérations sont celles classiquement utilisées dans les réseaux de neurones connus dans l'art antérieur. La machine de calcul 38 est aussi configurée pour effectuer des opérations de multiplication et de division déterministes dites « rapides », consommant une deuxième puissance de calcul inférieure à la première puissance de calcul et/ou une deuxième quantité d'énergie électrique inférieure à la première quantité d'énergie électrique. Ces opérations de multiplication et de division rapides donnent des résultats qui possèdent, en fonction des nombres sur lesquels elles portent, une précision inférieure ou égale à l'opération lente correspondante, respectivement multiplication ou division. Des exemples d'opérations rapides sont donnés plus bas.

Le moyen de communication 37 avec le dispositif au sol transmet au dispositif au sol et/ou reçoit du dispositif au sol des données d'apprentissage.

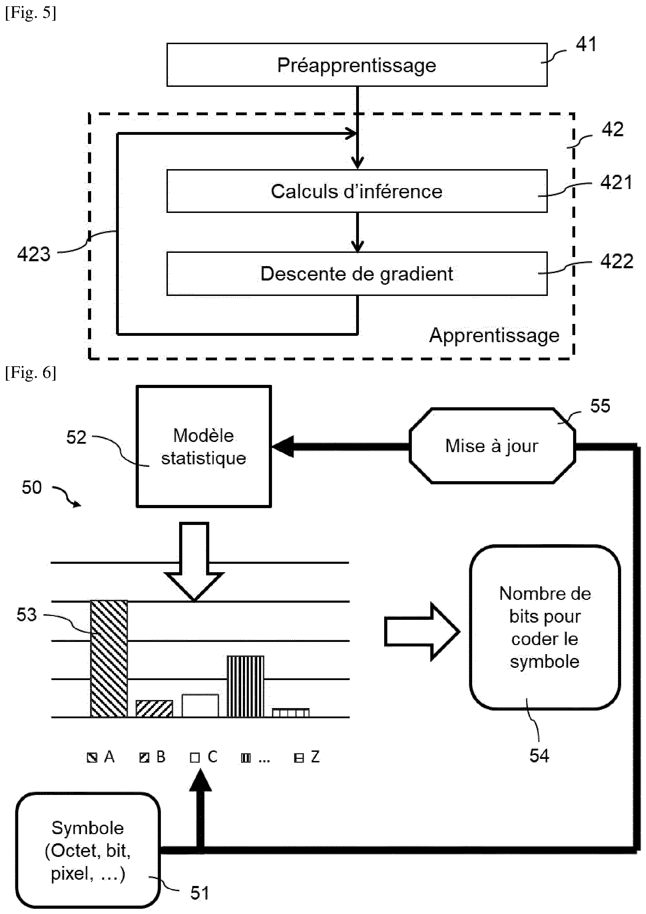

Comme illustré en **[****Fig. 5****]**, après une étape 41 de préapprentissage, ou apprentissage initial, réglant le réseau de neurones 33, préférentiellement avant le lancement de l'engin spatial, la machine de calcul 38 réalise au moins une autre étape d'apprentissage 42 du réseau de neurones 33. Chaque phase d'apprentissage 42 comporte un réglage des données représentatives du réseau de neurones 33 par un algorithme itératif mettant en œuvre des données d'apprentissage. Le terme de réglage signifie ici un ajustement par apprentissage des données représentatives des pondérations et/ou des valeurs de seuils d'activation définissant le réseau de neurones 33.

Chacune des itérations 423 de l'algorithme itératif comporte des calculs d'inférence 421 suivis de calculs de descente de gradient 422. Les calculs d'inférence 421 utilisent au moins une opération de division déterministe rapide.

Grâce à l'utilisation d'au moins une opération de division rapide, le dispositif de traitement de données embarqué 32 permettant d'adapter la puissance de calcul et l'énergie électrique nécessaires pour chaque phase d'apprentissage à bord de l'engin spatial. De plus, le dispositif de traitement de données embarqué 32 permet de mettre en œuvre, dans le dispositif au sol, un autre réseau de neurones identique au réseau de neurones embarqué.

Dans l'exemple illustré en [Fig. 1], une application spatiale embarquée est une application de compression de données réalisée par le module de compression 35. Le réseau de neurones embarqué 33 fournit un signal de prédiction au module de compression 35 qui génère des données compressées qui sont transmises au dispositif au sol par le moyen de communication 37. Avec la duplication du réseau de neurones 33, dans le dispositif de traitement au sol, on exécute au sol une application de décompression de données utilisant un réseau de neurones identique au réseau de neurones embarqué 33 et on obtient donc le même signal de prédiction utilisé par un module de décompression également exécuté au sol, qui génère des données décompressées à partir des données compressées reçues de l'engin spatial 30.

Un exemple d'algorithme 50 de compression de données entropique est décrit en regard de la **[****Fig. 6****].** Des symboles 51 à coder sont obtenus en entrées. Ces symboles 51, qui sont, par exemple, des octets représentant des valeurs obtenues par des capteurs, ou des valeurs de pixels, sont traités par un modèle statistique 52, qui les répartit en classes 53, par exemple selon un histogramme. Une mise à jour 55 est réalisée à partir des symboles 51 reçus en entrée. Cette mise à jour du modèle statistique met en œuvre le réseau de neurones embarqué 33.

A partir de cette répartition en classes, on détermine un nombre de données binaires (bits) employés pour coder chaque symbole, selon la règle suivante : plus un symbole est probable, c'est-à-dire plus la classe dans laquelle il se trouve est peuplée, moins on utilise de bits pour le coder.

Dans l'exemple illustré en [Fig. 6], les données d'entrée 51 sont des données brutes constituées de symboles et au moins une donnée de sortie est représentative d'une prédiction d'une occurrence des symboles, cette donnée de sortie étant fournie à un module 35, implémenté à bord de l'engin spatial 30, de compression entropique des données brutes d'entrée 51.

Dans cette compression de données, les multiplications sont utilisées lors de l'inférence et lors du calcul du gradient par la méthode de la rétropropagation de l'erreur. Les divisions sont utilisées dans toutes les étapes de normalisation statistiques (par exemple la Batch Normalisation, ou le Softmax) mais aussi dans le calcul de la direction de descente à partir du gradient pendant l'entrainement du réseau de neurones (voir, par exemple, la définition des algorithmes d'optimisation classiques tels que Adam ou RMSProp).

Préférentiellement, on utilise une opération de division rapide pour toutes les opérations impliquant une division sauf le Softmax. En mathématiques, la fonction softmax, ou fonction exponentielle normalisée, est une généralisation de la fonction logistique qui prend en entrée un vecteur z = (z₁ , ... , z_{K}) de K nombres réels et qui en sort un vecteur σ (z) de K nombres réels strictement positifs et de somme 1. La composante *j* du vecteur σ (z) est égale à l'exponentielle de la composante *j* du vecteur z divisée par la somme des exponentielles de toutes les composantes de z. En théorie des probabilités, la sortie de la fonction softmax peut être utilisée pour représenter une loi catégorielle - c'est-à-dire une loi de probabilité sur K différents résultats possibles.

Cette étape Softmax est en général la dernière couche d'un réseau de neurones dont la sortie est une distribution de probabilité sur un ensemble fini de classes. Cela couvre les problèmes de classification mais aussi la modélisation statistique de données, par exemple dans le cadre d'un algorithme de compression. Utiliser la division rapide pour le Softmax donnerait un apprentissage rapidement instable dans la plupart des cas. Cela est dû au fait que l'erreur est retro-propagée à travers cette couche, la dernière du réseau, avant d'atteindre toutes les autres couches. Couplé au fait que cette étape utilise des fonctions exponentielles, l'erreur induite est non linéaire et n'est pas compensée par effet de moyenne quand on la rétro-propage dans les autres couches (contrairement à la multiplication rapide utilisée lors de l'inférence dont les erreurs se compensent en moyenne très bien).

Dans des variantes, la machine de calcul 38 est configurée pour fonctionner selon un premier mode de fonctionnement correspondant aux phases d'apprentissage et selon un second mode de fonctionnement correspondant à des calculs d'inférences sans apprentissage, des multiplications rapides et des divisions rapides étant utilisées dans ces deux modes de fonctionnement.

Préférentiellement, la machine de calcul 38 est configurée pour que les calculs de descente de gradient utilisent des opérations de multiplication déterministes rapides et des opérations de division déterministes rapides.

Dans l'application à la compression de données, et dans d'autres applications de l'invention, préférentiellement, le réseau est entraîné par un algorithme visant à ajuster au moins les poids à partir d'une erreur calculée en sortie et dans lequel l'erreur en sortie de chaque neurone est propagée vers l'amont par une somme des multiplications de chaque erreur, selon la multiplication rapide, avec au moins un poids propre à la liaison avec un neurone amont, les poids étant ajustés itérativement. On obtient ainsi le gradient, la correction appliquée aux poids est calculée à partir de ce gradient, généralement en le normalisant par une estimation de sa variance. On utilise donc une division rapide terme à terme par l'estimation de l'écart-type de chaque terme. Chaque terme de ce vecteur ainsi obtenu à partir du gradient est la correction appliquée au poids correspondant du réseau de neurones.

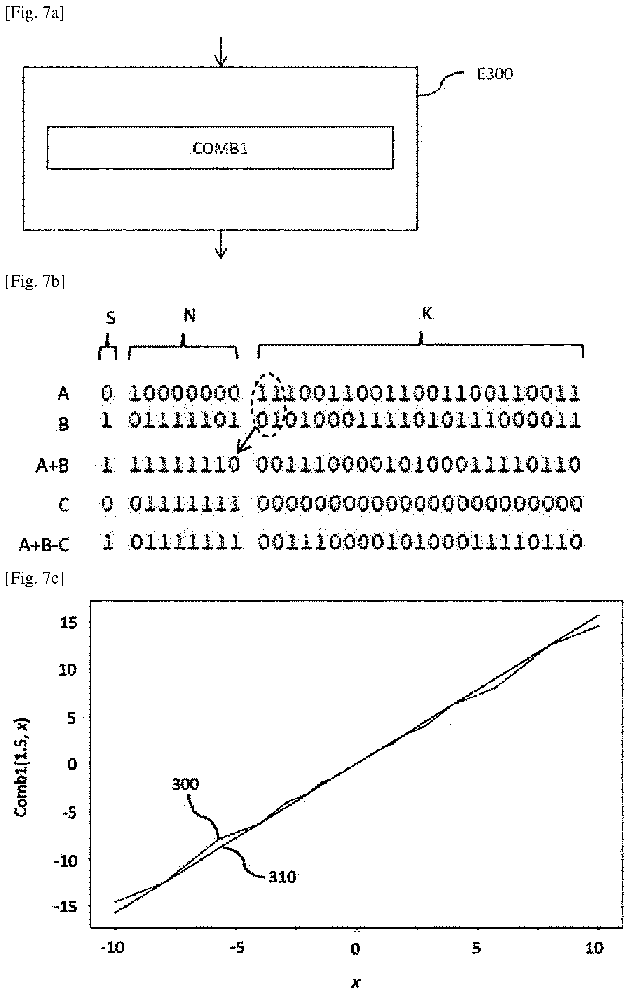

Comme représenté à la **[****Fig. 7a****],** le procédé comprend au moins une étape E300, où pour au moins une couche de neurones, la sortie de chaque neurone 110 de la couche est déterminée en fonction d'au moins une valeur amont (par exemple *xₖ* si l'on se réfère à la couche L1 du réseau 100 de la [Fig. 1]) associée à un poids (par exemple ${w}_{k , j}^{\left(0\right)}$ si l'on se réfère au *j*-ème neurone de la première couche L1 au réseau 100 de la [Fig. 1]) pour être combinés. A cet effet, chaque valeur amont et son poids sont décomposés en signe, mantisse et exposant pour être combinés, dans une multiplication rapide, sous la forme : $Comb 1 \left(valeur amont,poids\right) = \left({S}_{A}\times {S}_{B}\right) \times \left(1+{M}_{A}+{M}_{B}\right) \times {2}^{{E}_{A} + {E}_{B} ∓ 2 C}$ (1) la valeur amont et le poids étant décomposés comme suit : $\begin{matrix}valeur amont = {S}_{A} \times \left(1+{M}_{A}\right) \times {2}^{{E}_{A} ∓ C} \\ poids = {S}_{B} \times \left(1+{M}_{B}\right) \times {2}^{{E}_{B} ∓ C}\end{matrix}$ (2) où :
- Comb1 est une première fonction de combinaison ;
- S_{A} est le signe de la valeur amont ;
- S_{B} est le signe du poids associé à la valeur amont ;
- M_{A} est la mantisse de la valeur amont ;
- M_{B} est la mantisse du poids associé à cette valeur amont ;
- E_{A} est l'exposant de la valeur amont ;
- E_{B} est l'exposant du poids associé à cette valeur amont ; et
- C est un biais utilisé dans la décomposition en signe, mantisse et exposant dans une base déterminée.

Suivant l'exemple de réalisation considéré, le biais C peut être positif ou négatif. Le biais dépend du codage utilisé. Plus particulièrement le biais permet de coder les exposants négatifs, ce qui correspond au codage retenu par le standard IEEE-754, mais il est aussi possible d'utiliser un codage en « complément à 2^N » qui permettrait de supprimer les soustractions ou additions liées au biais. Ainsi le biais peut être nul dans l'équation (1).

Les mantisses M_{A} et M_{B} peuvent être codées chacune sur un mot binaire interprété comme un nombre entier lors de l'addition des mantisses. En cas de dépassement, dit « overflow » en anglais, résultant de la somme des mantisses M_{A} + M_{B}, le bit de dépassement est reporté en tant que bit d'incrément de l'exposant.
Hormis pour la gestion de la saturation, cette combinaison s'obtient à l'aide d'une simple addition sur l'écriture binaire des nombres interprétés comme des entiers.

Dans un mode dégradé de réalisation, on calcule la somme des mantisses à l'aide de l'addition de nombres en virgule flottante, par exemple pour faciliter une implémentation sur des outils déjà existant tels que TensorFlow (marque déposée) ou PyTorch (marque déposée). Le résultat de ce calcul n'est toutefois pas continu. La discontinuité impacte négativement les performances dans certaines applications comme par exemple pour un débruitage d'image ou un débruitage de signaux. Si la continuité n'est pas vérifiée sur tout l'intervalle de définition cela n'empêche toutefois pas de calculer une dérivée et donc ne gêne pas l'apprentissage. En effet, en cas de discontinuité en certains points il faut choisir entre la dérivée à droite et à gauche, mais celles-ci sont suffisamment similaires et statistiquement rares pour ne pas impacter significativement les performances d'une méthode d'apprentissage stochastique.

Comme illustré à la **[****Fig. 7b****],** les exposants E_{A} et E_{B} sont codés chacun sur un mot binaire de N bits, les signes S_{A} et S_{B} sont codés chacun sur un bit, les mantisses sont codées sur K bits. Le report du bit d'incrément de l'exposant est symbolisé sur la [Fig. 7b] par la flèche en pointillés. Par exemple, la première fonction de combinaison Comb1 peut s'écrire en langage C selon la routine suivante lorsque le biais C correspond à la valeur 127 et que les mantisses sont codées sur K = 23 bits (cas de la [Fig. 7b]) :

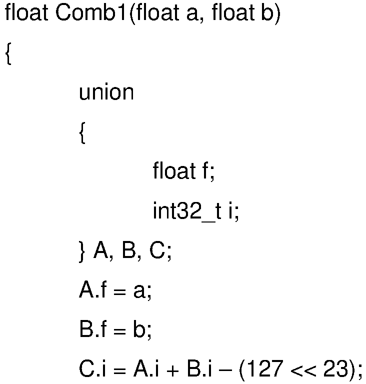

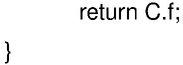

Par ailleurs, la fonction de combinaison Comb1 (comprenant l'addition des mantisses avec report sur l'exposant en cas de dépassement) est continue, monotone et différentiable comme illustré sur la **[****Fig. 7c****].** Plus particulièrement, la courbe 300 représente le résultat de la fonction de combinaison Comb1 appliquée à une valeur constante égale à 1,5 et à la variable *x*. A titre de comparaison, la courbe 310 représente le résultat d'une multiplication lente classique de la valeur constante égale à 1,5 par la variable *x*. Avantageusement la courbe 300 de la première combinaison selon l'invention présente des propriétés de continuité, de monotonicité et de différentiabilité. Ces propriétés font que la fonction de combinaison Comb1 peut être utilisée dans le réseau 100 de neurones appliqué notamment au débruitage d'image ou au débruitage de signaux.

Dans certains exemples de réalisation, chaque poids associé à chaque valeur amont pour la détermination d'un neurone 110 est propre à la liaison entre cette valeur amont et ce neurone 110. Une telle implémentation correspond par exemple au réseau 100 de la [Fig. 1].

Dans certains exemples de réalisation, chaque neurone 110 d'une couche, par exemple un neurone 110 de la couche L2 sur la [Fig. 1], est déterminé en fonction de plusieurs neurones 110 d'une couche précédente, par exemple plusieurs neurones 110 de la couche L1 sur la [Fig. 1], portant chacun une valeur amont, par une somme des combinaisons, selon la première fonction de combinaison Comb1, des neurones 110 de la deuxième couche précédente avec leur poids, correspondant à des multiplications rapides. Les résultats des multiplications rapides, selon la première fonction de combinaison Comb1, sont simplement sommés entre eux.

Dans certains exemples de réalisation, les neurones d'une couche précédente sont chacun associé à une fonction d'activation (par exemple ${s}_{j}^{\left(i\right)} \left({e}_{j}^{\left(i\right)}\right)$ si l'on se réfère au *j*-ème neurone 110 de la i-ème couche du réseau 100 de la [Fig. 1]) au-delà d'un seuil d'activation déterminé pour calculer les neurones dans la couche suivante.

Dans certains exemples de réalisation, chaque neurone 110 d'une couche peut être déterminé en fonction d'un biais combiné, selon une multiplication rapide correspondant à la première fonction de combinaison Comb1, à un poids propre à la liaison entre ce biais et le neurone.

Dans certains exemples de réalisation, chaque neurone 110 d'une couche (par exemple la couche L3 sur la [Fig. 2]) est déterminé également en fonction d'au moins une valeur, portée par un neurone 110 d'une couche avale (par exemple la couche L7 sur la [Fig. 2]), combinée, selon la première fonction de combinaison Comb1, à un poids propre.

Dans certains exemples de réalisation, le réseau est entraîné par un algorithme visant à ajuster les poids, ainsi qu'éventuellement les seuils d'activation, à partir d'une erreur calculée en sortie, l'erreur en sortie de chaque neurone 110 étant propagée vers l'arrière par une somme des combinaisons, à l'aide de la première fonction selon l'invention, de chaque erreur. Les poids sont ainsi ajustés itérativement.

Dans certains exemples de réalisation, le poids est ajusté itérativement en fonction d'un taux d'apprentissage *α* combiné, selon la première fonction Comb1 selon l'invention, au gradient d'une fonction d'erreur (par exemple l'erreur calculée en sortie du réseau *100),* ∇*_{θ}E*(*θ*) avec *θ* un vecteur comprenant les paramètres à ajuster. Le taux d'apprentissage, combiné selon l'invention, permet avantageusement d'ajuster la vitesse de convergence de l'apprentissage.

Avantageusement, les paramètres du réseau 100 peuvent converger vers un état minimisant l'erreur *E*(*θ*) en sortie.

Le gradient est par exemple utilisé sous une forme normalisée selon l'invention et calculée à l'aide d'une deuxième fonction de combinaison :
*Comb2* (*gradient, RAC (Comb1 (norme du gradient, norme du gradient*))) *=* $\left({S}_{D}\times {S}_{F}\right) \times \left(1+{M}_{D}-{M}_{F}\right) \times {2}^{{E}_{D} - {E}_{F}}$ (3) où:
- RAC est la fonction racine carrée connue
- Comb2 est la deuxième fonction de combinaison ;
- S_{D} est le signe de la valeur du gradient ;
- S_{F} est le signe de RAC (Comb1 (norme du gradient, norme du gradient)) ;
- M_{D} est la mantisse de la valeur du gradient ;
- M_{F} est la mantisse de RAC (Comb1 (norme du gradient, norme du gradient)) ;
- E_{D} est l'exposant de la valeur du gradient et
- E_{F} est l'exposant de RAC (Comb1 (norme du gradient, norme du gradient)).

Ainsi, la deuxième fonction de combinaison Comb2 représente une alternative à une normalisation classique et permet ainsi de réduire la puissance de calcul, le temps de calcul et l'énergie nécessaires. La deuxième fonction de combinaison Comb2 selon l'invention, qui correspond par exemple à une division rapide, mets en effet en œuvre une simple soustraction des mantisses.

Dans les exemples de réalisation précités, la première fonction de combinaison Comb1 selon l'invention et respectivement la deuxième fonction de combinaison Comb2 selon l'invention sont utilisées pour des calculs déterminés, lors de la mise en œuvre d'un réseau de neurones pour exécuter des multiplications rapides ou respectivement des divisions rapides.

Alternativement, dans certains exemples de réalisation, on peut remplacer systématiquement et automatiquement toute multiplication et/ou division grâce à un jeu d'instructions spécifiques compilées et exécutées par un calculateur classique ou par un calculateur spécifique. Ainsi la première fonction de combinaison Comb1 selon l'invention peut se substituer à chaque multiplication lente. La deuxième fonction de combinaison Comb2 selon l'invention peut se substituer à chaque division lente.

Des premières fonctions de combinaison Comb1 selon l'invention, peuvent ainsi se substituer aux multiplications lentes classiques d'une mise en œuvre classique d'un réseau de neurones où les multiplications intervenaient dans presque toutes les opérations (inférence, calcul du gradient, calcul du pas, normalisation du gradient). Des deuxièmes fonctions de combinaison Comb2 selon l'invention, peuvent se substituer aux divisions lentes qui intervenaient par exemple lors d'opérations de normalisation, même si les divisions représentent un volume de calculs faible comparé à la quantité de multiplications. On peut alors réaliser un calculateur complètement dépourvu d'opérations complexes et capable de réaliser l'apprentissage d'un réseau de neurones. Cette approche est avantageuse parce que la division lente classique coûte cher à implémenter sous forme de circuit.

Dans certains cas, certaines fonctions d'activation lentes complexes peuvent encore subsister mais elles représentent toutefois un volume de calculs faible comparé à la quantité de multiplications.

En alternative, la première fonction de combinaison selon l'invention peut se substituer à une partie des multiplications lentes classiques, par exemple 20%, 30%, 50% voire 80%. Il en résulte notamment un gain d'énergie et de temps de calcul.

Comme on le comprend à la lecture de la description qui précède, dans des modes de réalisation, chacune des opérations de division rapides réalisées, pour deux nombres mémorisés D et F, correspond à : $\left({S}_{D}\times {S}_{F}\right) \times \left(1+{M}_{D}-{M}_{F}\right) \times {2}^{{E}_{D} - {E}_{F}}$ où S_{D} est le signe de D, S_{F} est le signe de F, M_{D} est la mantisse de D, M_{F} est la mantisse de F, E_{D} est l'exposant de D, et E_{F} est l'exposant de F, mantisse et exposant étant définis dans une base déterminée.

Dans des modes de réalisation mettant en œuvre des opérations de multiplications rapides, chacune des opérations de multiplication rapides réalisées, pour deux nombres mémorisés A et B, correspond à : $\left({S}_{A}\times {S}_{B}\right) \times \left(1+{M}_{A}+{M}_{B}\right) \times {2}^{{E}_{A} + {E}_{B} ∓ 2 C}$ les deux nombres mémorisés A et B étant décomposés comme suit : $A = {S}_{A} \times \left(1+{M}_{A}\right) \times {2}^{{E}_{A} ∓ C}$ $B = {S}_{B} \times \left(1+{M}_{B}\right) \times {2}^{{E}_{B} ∓ C}$ où S_{A} est le signe de A, S_{B} est le signe de B, M_{A} est la mantisse de A, M_{B} est la mantisse de B, E_{A} est l'exposant de A, E_{B} est l'exposant de B, et C est un biais utilisé dans la décomposition en signe, mantisse et exposant étant définis dans une base déterminée.

Préférentiellement, toutes les opérations de multiplication comprises dans lesdits calculs d'inférence et de descente de gradient sont des opérations de multiplication rapides.

Préférentiellement, chaque valeur portée par un des neurones 110 et chaque facteur de pondération associé à une transmission d'une valeur d'un neurone 110 à l'autre, est codé sur un même nombre de données binaires (« bits »), dans un même format sous la forme d'un nombre à virgule flottante. Par exemple, ce format est un nombre à virgule flottante 32 bits.

On observe, en [Fig. 14], un système 60 de traitement de données pour une application spatiale comportant un dispositif de traitement de données embarqué 32 dans un engin spatial 30 et un dispositif 82 de traitement au sol dans une installation au sol 80. L'engin spatial 30 comprend par exemple un réseau de neurones mis en œuvre par une machine de calcul à bord utilisant des multiplications rapides et des divisions rapides. L'installation au sol 80 comprend par exemple un réseau de neurones mis en œuvre par une machine de calcul utilisant également des multiplications rapides et des divisions rapides. L'installation au sol 80 comporte également un moyen de communication 87 avec le moyen de communication 37 de l'engin spatial 30 et le dispositif de traitement de données au sol 82. Ce dispositif de traitement de données au sol 82 comporte une machine de calcul 88 identique à celle embarquée à bord du satellite mais fonctionnant en décompresseur, tandis que la machine de calcul à bord fonctionne en compresseur. Dans la machine de calcul au sol, une entrée de données 81 fournit des données à un réseau de neurones 83 implémenté par la machine de calcul 88. Le réseau de neurones 83 fournit des données en sortie 84.

Le moyen de communication 37 est configuré pour transmettre au moyen de communication 87 des données, notamment des données d'apprentissage compressées. Les données transmises étant compressées, on les récupèrerait en sortie 84 du décompresseur. En effet le décompresseur est configuré en fonction des données passées. Donc le décodeur a aussi reçu et décodé toute l'information nécessaire lorsqu'il décode un octet. Ce principe est utilisable pour la compression, c'est valable aussi pour de la vidéo avec compensation du mouvement. On synchronise ainsi le codeur à bord du satellite avec le décodeur au sol.. Le fonctionnement des machines de calcul 38 et 88 étant identiques, les données représentatives des réseaux obtenues par réglage mettant en œuvre le même algorithme itératif et le même nombre d'itérations, sont identiques. En particulier, les opérations de division rapide et, éventuellement, de multiplications rapides étant déterministes, leurs résultats sont identiques dans l'engin spatial 30 et dans l'installation au sol 80.

Dans des modes de réalisation, au moins l'un des dispositifs de traitement de données 32 ou 82 comporte, de plus, un module d'évaluation de performance. En figure 14, c'est le dispositif de traitement de données au sol 82, qui comporte un module d'évaluation de performance 89.

Le module d'évaluation de performance 89 (ou son équivalent dans l'engin spatial 30) mémorise, d'une part, une configuration du réseau de neurones (y compris ses pondérations et ses valeurs de seuil d'activation) ayant une performance mesurée déterminée à une date déterminée et compare, d'autre part, la performance mémorisée avec une performance mesurée d'une autre configuration du réseau réglée par une phase d'apprentissage. La machine de calcul 88 est configurée pour faire revenir le réseau de neurones 83 à la configuration du réseau mémorisée par le module d'évaluation de performance 89, si la performance de la configuration du réseau réglée par une phase d'apprentissage est inférieure à la performance de la configuration du réseau mémorisée. Pour que le réseau de neurones 33 reste identique au réseau de neurones 83, le dispositif de traitement de données embarqué 32 comporte un module 39 de mémorisation de la même configuration de réseau de neurones que le module 89.

En variante, le dispositif de traitement de données embarqué 32 comporte un module 39 d'évaluation de performance identique au module 89.

En variante, lorsque la machine de calcul 88 fait revenir le réseau de neurones 83 à la configuration du réseau mémorisée par le module d'évaluation de performance 89, le moyen de communication au sol 87 transmet au moyen de communication embarqué 37 les données de configuration du réseau de neurones 33.

### 6. EXEMPLES DE MISE EN ŒUVRE DE L'INVENTION

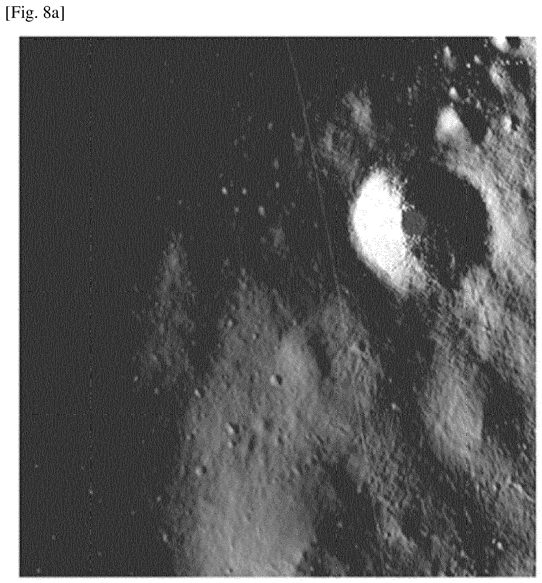

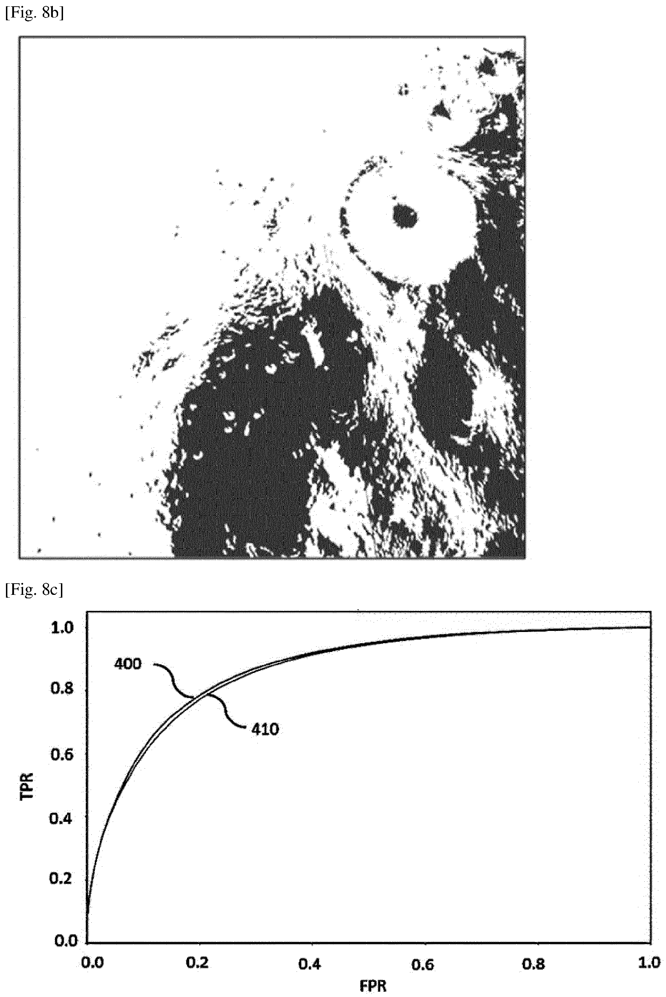

On présente désormais, en relation avec la **[****Fig. 8a****], la [****Fig. 8b****]** et la **[****Fig. 8c****]** un exemple de performances de classification obtenues avec un réseau 100 de neurones 110 mis en œuvre selon l'invention.

Plus particulièrement, la [Fig. 8a] présente une photo de la surface de la lune sur laquelle on cherche à classifier des zones pouvant servir à l'alunissage d'un engin spatial. La [Fig. 8b] présente une photo résultant du traitement de la photo de la [Fig. 8a] par un réseau 100 (par exemple, un réseau du type DNN) entraîné dans ce but selon l'invention. L'inférence est mise en œuvre à l'aide d'une multiplication lente classique. Les zones noires sur la photo en sortie du réseau de neurones, comme représenté à la [Fig. 8b], représentent les zones classifiées comme pouvant être utilisées pour un alunissage. Dans ce contexte, la [Fig. 8c] présente la fonction d'efficacité du réseau 100, ou courbe ROC (de l'anglais « Receiver Operating Characteristic »), dite aussi courbe sensibilité/spécificité, appliquée à la classification de zones caractéristiques sur une photo. Une telle fonction est une mesure de la performance de classification du réseau 100 sous la forme d'une courbe qui donne le taux de vrais positifs (fraction des positifs qui sont effectivement détectés), ou TPR (de l'anglais « True Positive Rate »), en fonction du taux de faux positifs (fraction des négatifs qui sont incorrectement détectés), ou FPR (de l'anglais « False Positive Rate »).

A titre de comparaison, la courbe 400 représente la courbe ROC obtenue par apprentissage classique utilisant des opérations lentes du réseau 100. La courbe 410 représente la courbe ROC obtenue par apprentissage du réseau 100 selon l'invention, en mettant en œuvre des opérations rapides. On voit ainsi que la mise en œuvre à l'aide de la fonction de combinaison Comb1 selon l'invention ne dégrade pas sensiblement les performances de classification du réseau 100, malgré une charge de calcul remarquablement réduite.

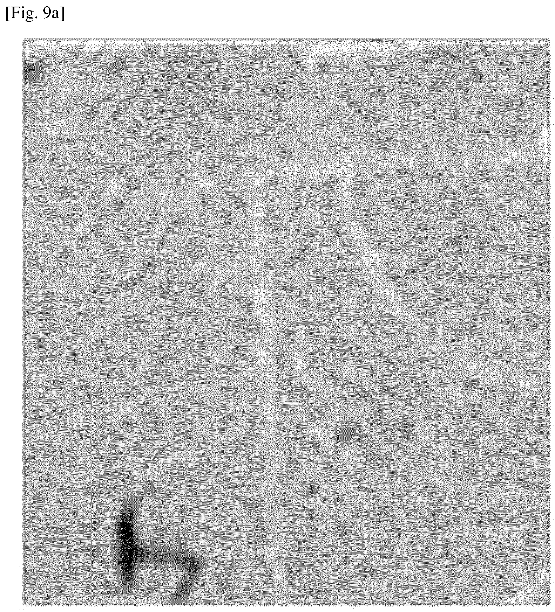

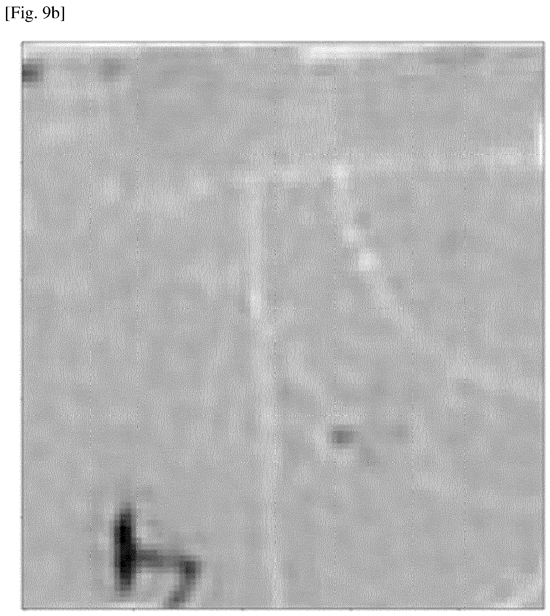

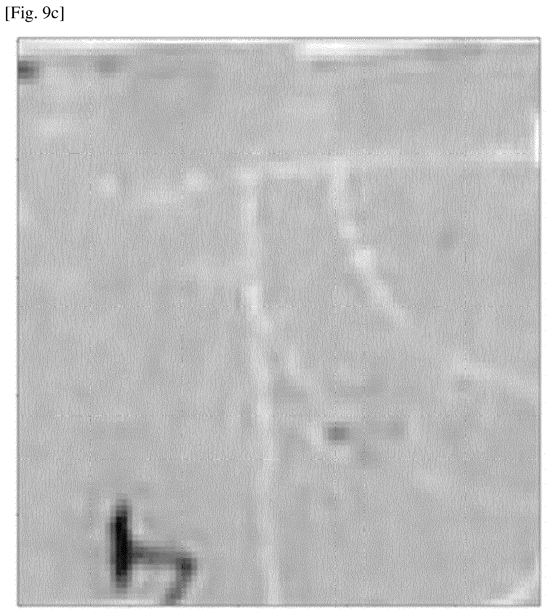

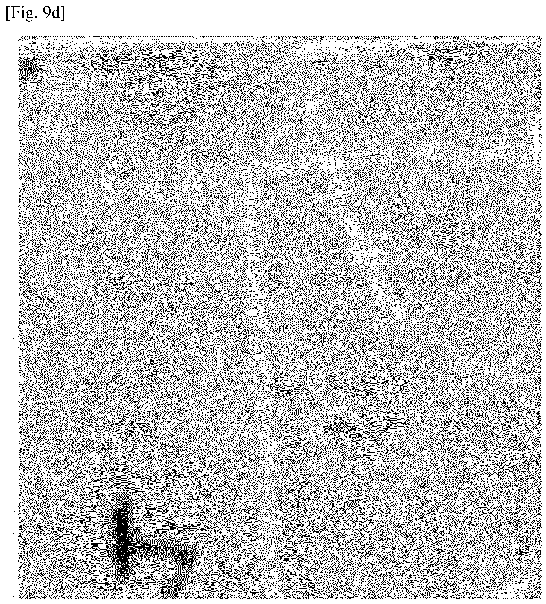

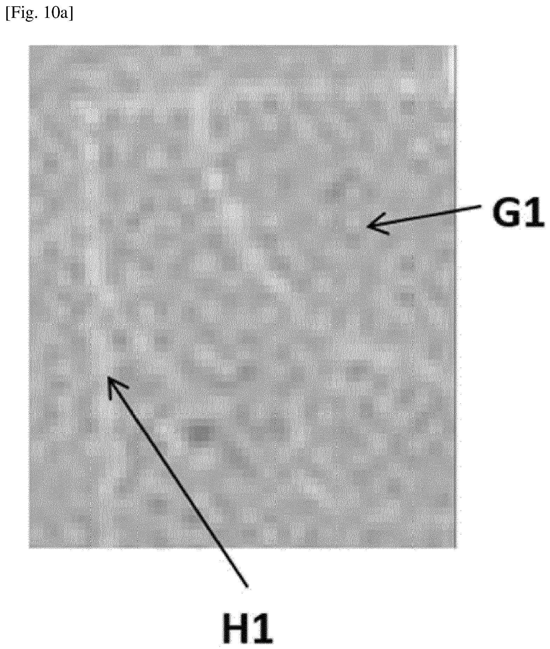

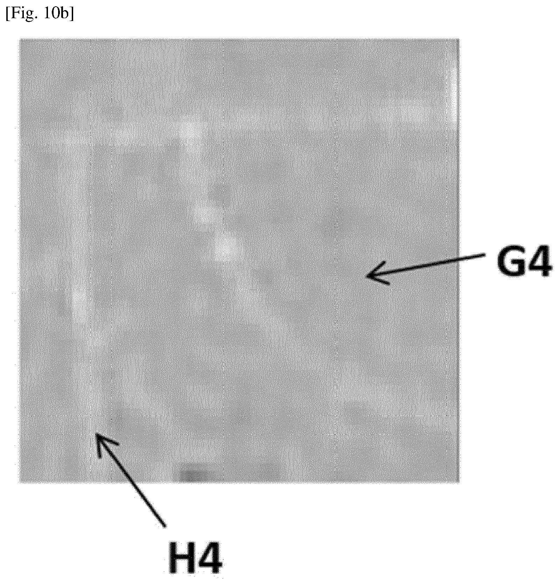

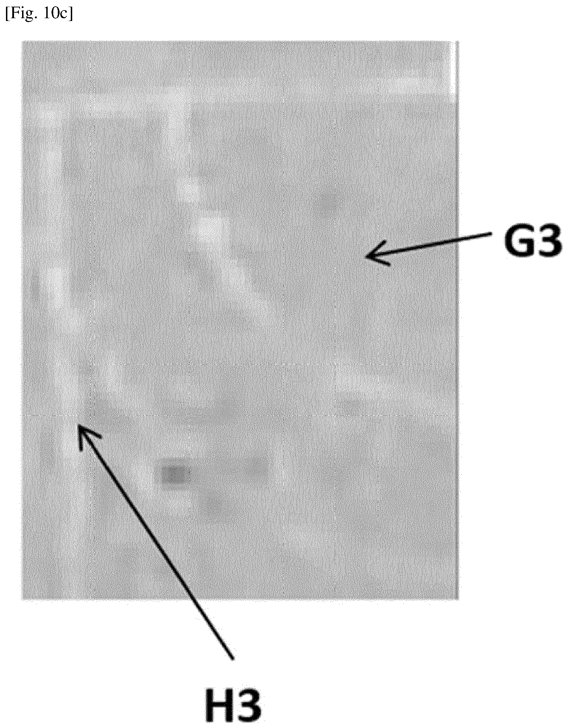

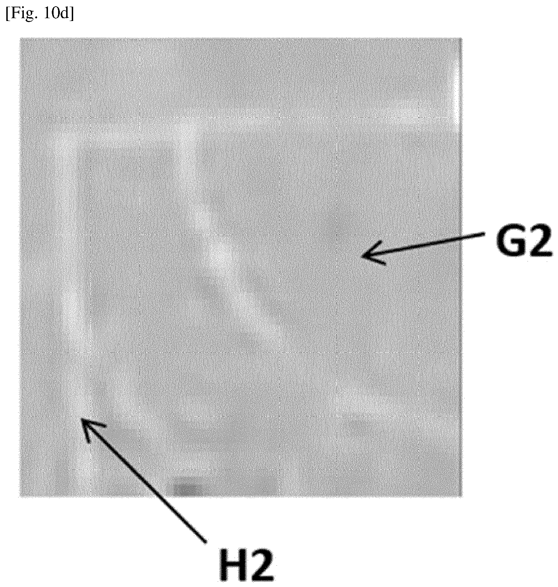

On présente désormais, en relation avec la **[****Fig. 9a****], la [****Fig. 9b****], la [****Fig. 9c****], la [****Fig. 9d****], la [****Fig. 10a****]**, **la [****Fig. 10b****], la [****Fig. 10c****] et la [****Fig. 10d****],** des exemples de performances de débruitage d'images.

Plus particulièrement, la [Fig. 9a] présente une photo bruitée d'un terrain de sport, fournie en entrée d'un réseau de neurones et que l'on cherche à débruiter. La [Fig. 9d] qui illustre le résultat du débruitage par un réseau de neurones entraîné à l'aide d'une multiplication lente classique, où l'inférence se fait également à l'aide d'une multiplication lente classique, est utilisée comme cas témoin. La [Fig. 9b] illustre le résultat du débruitage par un réseau de neurones entrainé selon l'invention, où l'inférence se fait également selon l'invention tandis que la [Fig. 9c] illustre le résultat du débruitage par un réseau de neurones entrainé pour moitié selon l'invention et pour moitié à l'aide d'une multiplication lente classique, où l'inférence se fait selon l'invention, avec des opérations rapides. La [Fig. 9d] illustre le résultat du débruitage de la photo de la [Fig. 9a] par un réseau de neurones entraîné à l'aide d'une multiplication lente classique, l'inférence se faisant également à l'aide d'une multiplication lente classique (cas témoin). On observe que la mise en œuvre de l'invention ne dégrade pas sensiblement les performances de débruitage malgré une charge de calcul remarquablement réduite. La [Fig. 9a] bruitée présente notamment des zones granuleuses et des lignes discontinues.

Si on se réfère aux détails, en relation avec la **[****Fig. 10a****],** la **[****Fig. 10b****],** la **[****Fig. 10c****]** et la **[****Fig. 10d****],** la zone granuleuse G1 est transformée en surface homogène G2 sur l'image témoin. Sur l'image obtenue pour moitié selon l'invention, G3 est également homogène. Sur l'image obtenue entièrement selon l'invention, la zone G4 a été homogénéisée et présente une très faible granulométrie, la rendant exploitable pour certaines applications. Les lignes H1 initiales peuvent être irrégulières voire discontinues, ces traits H2 étant rendus plus réguliers et continus sur l'image témoin. Dans les deux cas selon l'invention H3 et H4 sont également rendus plus réguliers et continus.

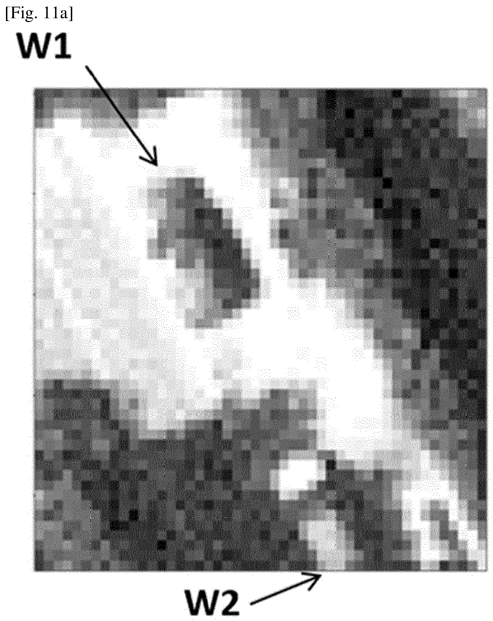

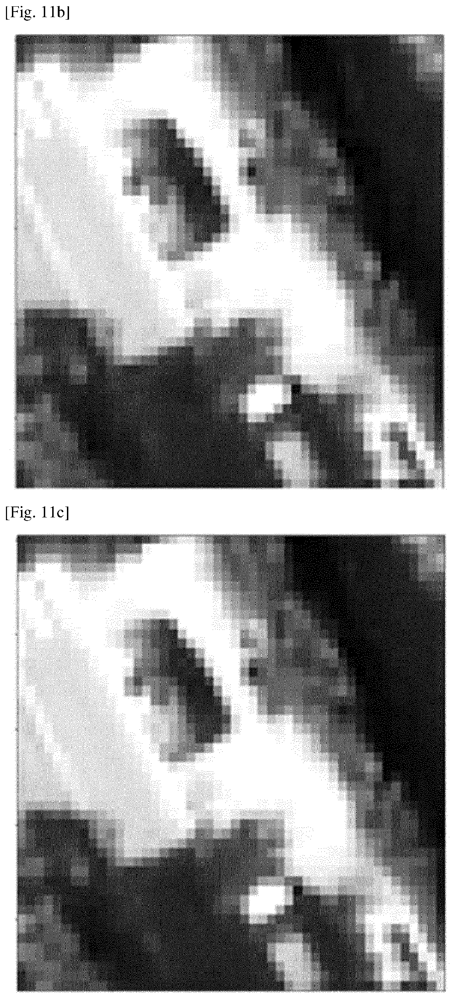

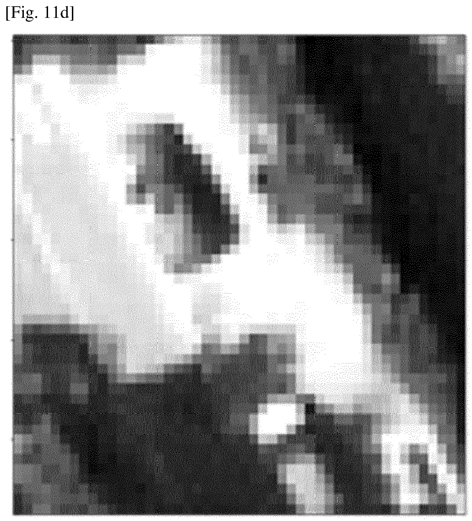

Selon un autre exemple d'application, la **[****Fig. 11a****]** représente une photo bruitée d'une route sur laquelle circulent deux véhicules, l'un, référencé W2, dans une zone d'ombre et l'autre, référencé W1, dans une zone ensoleillée. La **[****Fig. 11b****]** illustre le résultat du débruitage par un réseau de neurones utilisant une multiplication lente classique pour l'apprentissage et pour l'inférence et est utilisé comme cas témoin. La **[****Fig. 11c****]** illustre le résultat du débruitage de la photo par un réseau de neurones mis en œuvre selon l'invention, pour l'apprentissage et pour l'inférence, tandis que la **[****Fig. 11d****]** illustre le résultat du débruitage de la photo par un réseau de neurones entrainé pour moitié selon l'invention et pour moitié à l'aide d'une multiplication lente classique, l'inférence se faisant selon l'invention avec des multiplications rapides. On observe que les résultats de débruitage sont remarquablement proches.

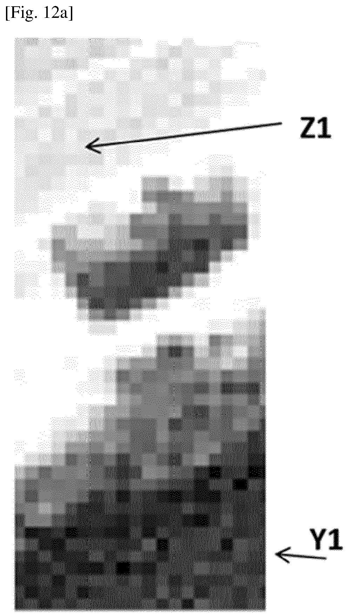

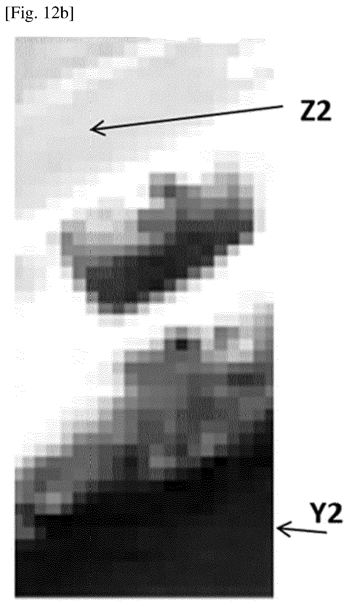

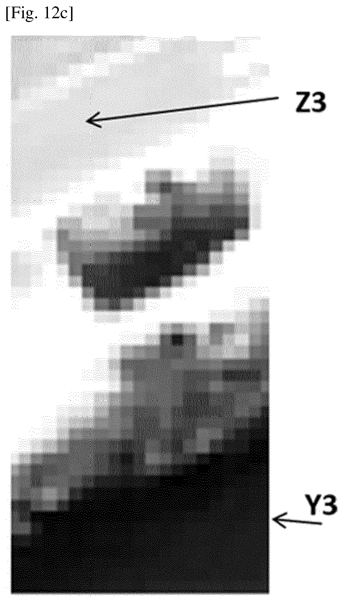

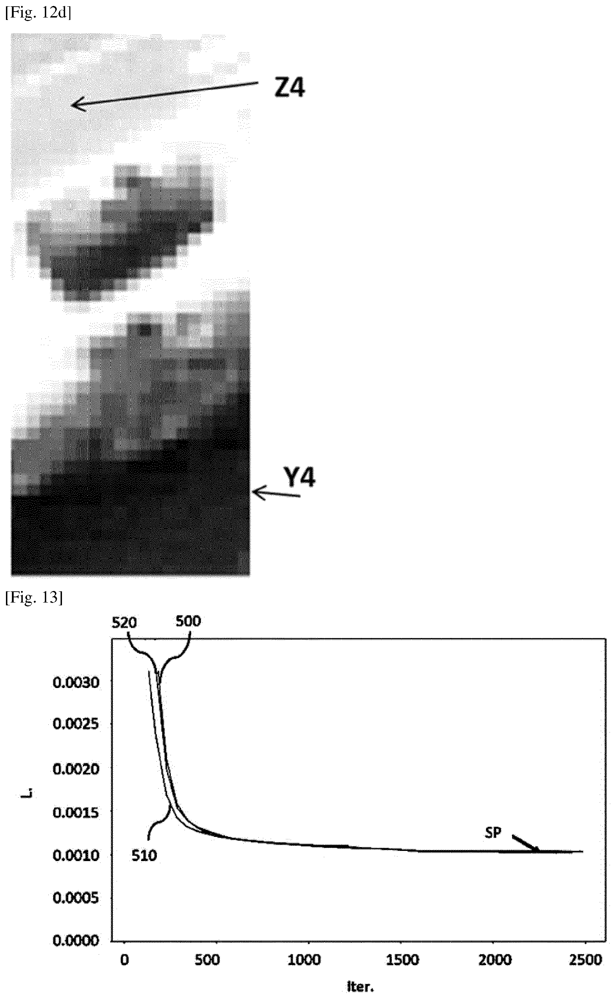

En zoomant avec une rotation dans le sens horaire d'un quart de tour, sur le véhicule dans la zone W1 d'ensoleillement, on voit en **[****Fig. 12a****]** qu'initialement, une zone d'ombre Z1 et une zone de lumière Y1 présentent chacune une granulométrie importante. Dans le cas de l'image témoin de la **[****Fig. 12b****]** ces zones Z2 et Y2 sont homogénéisées. De même, dans les résultats des traitements selon l'invention illustrés **[****Fig. 12c****]** et en **[****Fig. 12d****],** ces zones Z3, Z4, Y3 et Y4 ont été homogénéisées et permettent de distinguer nettement une zone ensoleillée ou une zone ombragée. Ainsi, la mise en œuvre d'un réseau de neurones réglé selon l'invention ne dégrade pas sensiblement les performances de débruitage malgré une charge de calcul remarquablement réduite grâce à la mise en œuvre de l'invention.

Dans ce contexte de débruitage d'images, la **[****Fig. 13****]** présente l'évolution de la fonction de perte L obtenue en fonction du nombre d'itérations lors de l'apprentissage d'un réseau 100 de neurones. La courbe 500 représente la fonction de perte L témoin obtenue par l'apprentissage classique du réseau 100 entièrement à l'aide d'une multiplication lente classique. La courbe 510 représente la fonction de perte L obtenue par apprentissage selon l'invention du réseau 100 avec une multiplication rapide. On observe que la rapidité d'apprentissage du réseau 100 n'est sensiblement pas dégradée, malgré une charge de calcul nettement réduite grâce à la mise en œuvre de l'invention. La courbe 520 représente la fonction de perte L obtenue par un apprentissage classique du réseau 100 jusqu'au label SP, puis un basculement à un entraînement selon l'invention utilisant notamment la première fonction de combinaison selon l'invention. La performance n'est alors quasiment pas dégradée.

Le procédé selon l'invention n'est pas limité à l'entraînement ou au calcul d'inférence, dans le domaine des traitements d'image. D'une manière générale, l'invention peut être appliquée à l'entraînement ou au calcul d'inférence, dans des domaines variés tels que :
- la reconnaissance d'image, les données en entrée correspondant à l'ensemble des pixels d'une image et les données en sortie correspondant à des classes d'objets, un indicateur de régions d'intérêt et/ou des coordonnées d'objets ;
- les applications de compression de données, les données en entrée correspondant à des images, sons, signaux, vidéos et les données en sortie correspondant à des données compressées ou plus facilement compressibles ;
- le traitement de données RF (détection, suivi, décodage et/ou séparation de signaux), les données en entrée correspondant aux signaux RF et les données en sortie correspondant à des signaux de sortie et/ou données associées aux signaux RF ;
- le traitement d'images pour un système de navigation (rendez-vous dans l'espace, atterrisseurs, rovers), les données en entrée correspondant à une ou plusieurs image(s) et les données en sortie correspondant à des paramètres caractérisant l'état d'une cible ou du vaisseau ;
- le traitement d'images pour des applications en robotique (entretien de satellites, assemblage en orbite), les données en entrée correspondant à une ou plusieurs image(s) et les données en sortie correspondant à des paramètres caractérisant l'état d'une cible, ou commande à envoyer à un actuateur (par exemple un bras robot) ;
- le traitement d'images pour des applications en métrologie (mesure de la géométrie d'un réflecteur déployable, mesures pour des tests au sol), les données en entrée correspondant à une ou plusieurs image(s) ou à des données dérivées d'images et les données en sortie correspondant à des informations 3D sur la cible ;
- la détection d'objets, les données en entrée correspondant à une ou plusieurs image(s) et les données en sortie correspondant à une carte indiquant les objets détectés (par exemple nuages ou voitures) ;
- la reconnaissance de zones planes, les données en entrée correspondant à l'ensemble des pixels d'une image et les données en sortie correspondant à des résultats binaires pour chaque pixel ; et
- le débruitage, ou « denoising » en anglais, les données en entrée correspondant à l'ensemble des pixels d'une image bruitée et les données en sortie correspondant à l'ensemble des pixels d'une image débruitée.

Dans des applications de la présente invention pour une application spatiale embarquée, on réexécute dans un équipement au sol l'application spatiale embarquée qui est exécutée dans l'engin spatial, pour vérifier au sol que tout se passe correctement dans l'engin spatial. Ceci permet un gain en autonomie de l'application spatiale embarquée, tout en réalisant une supervision au sol, par exemple pour s'assurer que l'apprentissage du réseau de neurones exécuté dans l'engin spatial ne diverge pas.

L'économie des ressources matérielles et énergétiques favorise l'implantation d'un réseau de neurones selon l'invention dans le domaine spatial, par exemple à bord d'un engin spatial tel qu'un satellite. Les réseaux de neurones selon l'invention peuvent également s'appliquer au pilotage autonome.

## Revendications

1. Dispositif de traitement de données (32), embarqué dans un engin spatial (30) et comportant un moyen de communication avec un dispositif au sol et une machine de calcul (38, 321, 322, 323), configurée pour mettre en œuvre un réseau de neurones (100, 120) recevant, en entrée, des données d'entrée (31) et générant, en sortie, au moins une donnée de sortie (34), le réseau de neurones comportant une pluralité de couches (L1 à L7), un neurone (110) d'une couche donnée étant déterminé en fonction d'au moins une valeur amont multipliée par un poids, la machine de calcul comportant une unité de traitement (321) et un espace mémoire (323) stockant des données représentatives du réseau de neurones,
**caractérisé en ce que** la machine de calcul est configurée pour effectuer des opérations de multiplication et de division dites « lentes », consommant une première puissance de calcul et une première quantité d'énergie électrique, et des opérations de multiplication et de division déterministes dites « rapides », consommant une deuxième puissance de calcul inférieure à la première puissance de calcul et/ou une deuxième quantité d'énergie électrique inférieure à la première quantité d'énergie électrique, opérations rapides dont le résultat possède, en fonction des nombres sur lesquels portent une opération rapide, une précision inférieure ou égale à l'opération lente correspondante,
**et en ce que** la machine de calcul est configurée pour effectuer au moins une phase d'apprentissage (42) du réseau de neurones, chaque phase d'apprentissage comportant un réglage des données représentatives du réseau de neurones par un algorithme itératif mettant en œuvre des données d'apprentissage, chaque itération (423) de l'algorithme itératif comportant des calculs d'inférence (421) suivis de calculs de descente de gradient (422), lesdits calculs d'inférence utilisant au moins une opération de division déterministe rapide,
le moyen de communication avec le dispositif au sol étant configuré pour transmettre au dispositif au sol et/ou recevoir du dispositif au sol des données d'apprentissage,
le dispositif de traitement de données permettant ainsi, d'une part, d'adapter la puissance de calcul et l'énergie électrique nécessaires pour ladite au moins une phase d'apprentissage à bord de l'engin spatial et, d'autre part, de mettre en œuvre, dans le dispositif au sol, un autre réseau de neurones identique au réseau de neurones embarqué.

2. Dispositif de traitement de données (32) selon la revendication 1, dans lequel la machine de calcul (38) est configurée pour que les calculs de descente de gradient utilisent des opérations de multiplication déterministes rapides et des opérations de division déterministes rapides.

3. Dispositif de traitement de données (32) selon l'une des revendications 1 ou 2, qui comporte, de plus, un module d'évaluation de performance (39) configuré pour, d'une part, mémoriser une configuration du réseau de neurones (33) ayant une performance mesurée déterminée à une date déterminée et, d'autre part, mesurer la performance du réseau de neurones obtenu par réglage de ses données représentatives par une phase d'apprentissage (42), et comparer la performance mémorisée avec la performance mesurée, la machine de calcul étant configurée pour faire revenir le réseau de neurones à la configuration du réseau mémorisée si la performance mesurée de la configuration du réseau réglée par une phase d'apprentissage est inférieure à la performance de la configuration du réseau mémorisée.

4. Dispositif de traitement de données (32) selon l'une des revendications 1 à 3, dans lequel la machine de calcul (38) est configurée pour que chacune des opérations de division rapides réalisées, pour deux nombres mémorisés D et F, correspond à : $\left({S}_{D}\times {S}_{F}\right) \times \left(1+{M}_{D}-{M}_{F}\right) \times {2}^{{E}_{D} - {E}_{F}}$ où S_{D} est le signe de D, S_{F} est le signe de F, M_{D} est la mantisse de D, M_{F} est la mantisse de F, E_{D} est l'exposant de D, et E_{F} est l'exposant de F, mantisse et exposant étant définis dans une base déterminée.

5. Dispositif de traitement de données (32) selon l'une des revendications 1 à 4, dans lequel la machine de calcul (38) est configurée pour que chacune des opérations de multiplication rapides réalisées, pour deux nombres mémorisés A et B, correspond à : $\left({S}_{A}\times {S}_{B}\right) \times \left(1+{M}_{A}+{M}_{B}\right) \times {2}^{{E}_{A} + {E}_{B} ∓ 2 C}$ les deux nombres mémorisés A et B étant décomposés comme suit : $A = {S}_{A} \times \left(1+{M}_{A}\right) \times {2}^{{E}_{A} ∓ C}$ $B = {S}_{B} \times \left(1+{M}_{B}\right) \times {2}^{{E}_{B} ∓ C}$ où S_{A} est le signe de A, S_{B} est le signe de B, M_{A} est la mantisse de A, M_{B} est la mantisse de B, E_{A} est l'exposant de A, E_{B} est l'exposant de B, et C est un biais utilisé dans la décomposition en signe, mantisse et exposant étant définis dans une base déterminée.

6. Dispositif de traitement de données (32) selon l'une des revendications 1 à 5, dans lequel la machine de calcul (38) est configurée pour que toutes les opérations de division comprises dans lesdits calculs d'inférence et de descente de gradient soient des opérations de division rapides, sauf les opérations de division comprises dans l'exécution de la fonction *Softmax* pour une couche finale du réseau de neurones.

7. Dispositif de traitement de données (32) selon l'une des revendications 1 à 6, dans lequel la machine de calcul (38) est configurée pour que toutes les opérations de multiplication comprises dans lesdits calculs d'inférence et de descente de gradient soient des opérations de multiplication rapides.

8. Dispositif de traitement de données (32) selon l'une des revendications 1 à 7, dans lequel lesdites données d'entrée (31) sont des données brutes constituées de symboles et dans lequel ladite au moins une donnée de sortie (34) est représentative d'une prédiction d'une occurrence des symboles, ladite au moins une donnée de sortie étant fournie à un module (35), implémenté à bord de l'engin spatial (30), de compression entropique desdites données brutes.

9. Dispositif de traitement de données (32) selon l'une des revendications 1 à 8, dans lequel la machine de calcul (38) est configurée pour fonctionner selon un premier mode de fonctionnement correspondant aux phases d'apprentissage et selon un second mode de fonctionnement correspondant à des calculs d'inférences sans apprentissage, des multiplications rapides et des divisions rapides étant utilisées dans ces deux modes de fonctionnement.

10. Dispositif de traitement de données (32) selon l'une des revendications 1 à 9, dans lequel la machine de calcul (38) est configurée pour que chaque valeur portée par un des neurones et chaque facteur de pondération associé à une transmission d'une valeur d'un neurone à l'autre, soient codés sur un même nombre de données binaires, dans un même format sous la forme d'un nombre à virgule flottante.

11. Dispositif de traitement de données (32) selon l'une des revendications 1 à 10, dans lequel le réseau de neurones (33) est configuré pour être réglé par un apprentissage initial (41) avant le lancement de l'engin spatial.

12. Système (60) de traitement de données pour une application spatiale comportant un dispositif de traitement de données (32) embarqué dans un engin spatial (30) selon l'une des revendications 1 à 11 et un dispositif (82) de traitement au sol dans une installation au sol (80) comportant un moyen de communication (87) avec le moyen de communication (37) de l'engin spatial (30), le dispositif de traitement de données au sol comportant une machine de calcul (88) identique à la machine de calcul (38) embarquée.

13. Système (60) de traitement de données selon la revendication 12, dans lequel la machine de calcul (88) au sol comporte, de plus, un module d'évaluation de performance (89) configuré pour, d'une part, mémoriser une configuration du réseau de neurones au sol (83) ayant une performance mesurée déterminée à une date déterminée et, d'autre part, mesurer la performance du réseau de neurones au sol obtenu par réglage de ses données représentatives par une phase d'apprentissage (42), et comparer la performance mémorisée avec la performance mesurée, la machine de calcul étant configurée pour faire revenir le réseau de neurones au sol et le réseau de neurones (33) embarqué à la configuration du réseau mémorisée si la performance mesurée de la configuration du réseau réglée par une phase d'apprentissage est inférieure à la performance de la configuration du réseau mémorisée.

14. Procédé de traitement de données à bord d'un engin spatial (30) comportant une étape de communication avec un dispositif au sol et une étape de calcul mettant en œuvre un réseau de neurones recevant, en entrée, des données d'entrée (31) et générant, en sortie, au moins une donnée de sortie (34), le réseau de neurones comportant une pluralité de couches (L1 à L7), un neurone (11) d'une couche donnée étant déterminé en fonction d'au moins une valeur amont multipliée par un poids, l'étape de calcul mettant aussi en œuvre un espace mémoire (323) stockant des données représentatives du réseau de neurones, **caractérisé en ce que** les calculs comportent des opérations de multiplication et de division dites « lentes », consommant une première puissance de calcul et une première quantité d'énergie électrique, et des opérations de multiplication et de division déterministes dites « rapides », consommant une deuxième puissance de calcul inférieure à la première puissance de calcul et/ou une deuxième quantité d'énergie électrique inférieure à la première quantité d'énergie électrique, opérations rapides dont le résultat possède, en fonction des nombres sur lesquels portent une opération rapide, une précision inférieure ou égale à l'opération lente correspondante,
**et en ce que** l'étape de calcul comporte au moins une phase d'apprentissage (42) du réseau de neurones, chaque phase d'apprentissage comportant un réglage des données représentatives du réseau de neurones par un algorithme itératif mettant en œuvre des données d'apprentissage, chaque itération (423) de l'algorithme itératif comportant des calculs d'inférence (421) suivis de calculs de descente de gradient (422), lesdits calculs d'inférence utilisant au moins une opération de division déterministe rapide,
l'étape de communication avec le dispositif au sol transmettant au dispositif au sol et/ou recevant du dispositif au sol des données d'apprentissage,
le procédé de traitement de données permettant ainsi, d'une part, d'adapter la puissance de calcul et l'énergie électrique nécessaires pour ladite au moins une phase d'apprentissage à bord de l'engin spatial et, d'autre part, de mettre en œuvre, dans le dispositif au sol, un autre réseau de neurones identique au réseau de neurones embarqué.

## Patentansprüche

1. Datenverarbeitungsvorrichtung (32), die an Bord eines Raumfahrzeugs (30) eingebettet ist und ein Kommunikationsmittel mit einer Bodenvorrichtung sowie eine Rechenmaschine (38, 321, 322, 323) umfasst, die so konfiguriert ist, dass sie ein neuronales Netzwerk (100, 120) implementiert, das als Eingang Eingangsdaten (31) empfängt und als Ausgang mindestens ein Ausgangsdatenelement (34) erzeugt, wobei das neuronale Netzwerk eine Vielzahl von Schichten (L1 bis L7) umfasst, wobei ein Neuron (110) einer bestimmten Schicht in Abhängigkeit von mindestens einem mit einem Gewicht multiplizierten vorgelagerten Wert bestimmt wird, wobei die Rechenmaschine eine Verarbeitungseinheit (321) und einen Speicherbereich (323) umfasst, in dem repräsentative Daten des neuronalen Netzwerks gespeichert sind,
**dadurch gekennzeichnet, dass** die Rechenmaschine so konfiguriert ist, dass sie sogenannte "langsame" Multiplikations- und Divisionsoperationen, die eine erste Rechenleistung und eine erste Menge elektrischer Energie verbrauchen, sowie sogenannte "schnelle" deterministische Multiplikations- und Divisionsoperationen durchführt, die eine zweite Rechenleistung, die kleiner ist als die erste Rechenleistung, und/oder eine zweite elektrische Energiemenge, die kleiner ist als die erste elektrische Energiemenge, verbrauchen, wobei das Ergebnis der schnellen Operationen je nach den Zahlen, auf die sich eine schnelle Operation bezieht, eine Genauigkeit besitzt, die kleiner oder gleich der entsprechenden langsamen Operation ist,
**und dass** die Rechenmaschine so konfiguriert ist, dass sie mindestens eine Lernphase (42) des neuronalen Netzwerks durchführt, wobei jede Lernphase eine Einstellung der repräsentativen Daten des neuronalen Netzwerks durch einen iterativen Algorithmus umfasst, der Lerndaten implementiert, wobei jede Iteration (423) des iterativen Algorithmus, die Inferenzberechnungen (421) umfasst, auf die Gradientenabstiegsberechnungen (422) folgen, wobei die Inferenzberechnungen mindestens eine schnelle deterministische Divisionsoperation verwenden,
wobei das Kommunikationsmittel mit der Bodenvorrichtung so konfiguriert ist, dass es Lerndaten an die Bodenvorrichtung überträgt und/oder von der Bodenvorrichtung empfängt,
wobei die Datenverarbeitungsvorrichtung es einerseits ermöglicht, die für die mindestens eine Lernphase an Bord des Raumfahrzeugs erforderliche Rechenleistung und elektrische Energie einzustellen, und andererseits ermöglicht, in der Bodenvorrichtung ein anderes neuronales Netzwerk zu implementieren, das mit dem eingebetteten neuronalen Netzwerk identisch ist.

2. Datenverarbeitungsvorrichtung (32) nach Anspruch 1, wobei die Rechenmaschine (38) so konfiguriert ist, dass die Gradientenabstiegsberechnungen schnelle deterministische Multiplikationsoperationen und schnelle deterministische Divisionsoperationen verwenden.

3. Datenverarbeitungsvorrichtung (32) nach einem der Ansprüche 1 oder 2, die ferner ein Leistungsbewertungsmodul (39) umfasst, das so konfiguriert ist, dass es einerseits eine Konfiguration des neuronalen Netzwerks (33) mit einer zu einem bestimmten Datum bestimmten gemessenen Leistung speichert und andererseits die Leistung des neuronalen Netzwerks misst, die durch Einstellung seiner repräsentativen Daten durch eine Lernphase (42) erhalten wird, und die gespeicherte Leistung mit der gemessenen Leistung vergleicht, wobei die Rechenmaschine so konfiguriert ist, dass sie das neuronale Netzwerk auf die gespeicherte Netzwerkkonfiguration zurücksetzt, wenn die gemessene Leistung der durch eine Lernphase eingestellten Netzwerkkonfiguration niedriger ist als die Leistung der gespeicherten Netzwerkkonfiguration.

4. Datenverarbeitungsvorrichtung (32) nach einem der Ansprüche 1 bis 3, wobei die Rechenmaschine (38) so konfiguriert ist, dass jede der durchgeführten schnellen Divisionsoperationen für zwei gespeicherte Zahlen D und F Folgendem entspricht: $\left({S}_{D}\times {S}_{F}\right) \times \left(1+{M}_{D}-{M}_{F}\right) \times {2}^{{E}_{D} - {E}_{F}}$ wobei S_{D} das Vorzeichen von D ist, S_{F} das Vorzeichen von F ist, M_{D} die Mantisse von D ist, M_{F} die Mantisse von F ist, E_{D} der Exponent von D ist und E_{F} der Exponent von F ist, wobei Mantisse und Exponent in einer bestimmten Basis definiert sind.

5. Datenverarbeitungsvorrichtung (32) nach einem der Ansprüche 1 bis 4, wobei die Rechenmaschine (38) so konfiguriert ist, dass jede der durchgeführten schnellen Multiplikationsoperationen für zwei gespeicherte Zahlen A und B Folgendem entspricht: $\left({S}_{A}\times {S}_{B}\right) \times \left(1+{M}_{A}+{M}_{B}\right) \times {2}^{{E}_{A} + {E}_{B} ∓ 2 C}$ wobei sich die beiden gespeicherten Zahlen A und B wie folgt zerlegt werden: $A = {S}_{A} \times \left(1+{M}_{A}\right) \times {2}^{{E}_{A} ∓ C}$ $B = {S}_{B} \times \left(1+{M}_{B}\right) \times {2}^{{E}_{B} ∓ C}$ wobei S_{A} das Vorzeichen von A ist, S_{B} das Vorzeichen von B ist, M_{A} die Mantisse von A ist, M_{B} die Mantisse von B ist, E_{A} der Exponent von A ist, E_{B} der Exponent von B ist und C ein Biaswert ist, die bei der Zerlegung in Vorzeichen, Mantisse und Exponent verwendet wird, wobei diese in einer bestimmten Basis definiert sind.

6. Datenverarbeitungsvorrichtung (32) nach einem der Ansprüche 1 bis 5, wobei die Rechenmaschine (38) so konfiguriert ist, dass alle in den Inferenz- und Gradientenabstiegsberechnungen enthaltenen Divisionsoperationen schnelle Divisionsoperationen sind, mit Ausnahme der Divisionsoperationen, die in der Ausführung der *Softmax*-Funktion für eine letzte Schicht des neuronalen Netzwerks enthalten sind.

7. Datenverarbeitungsvorrichtung (32) nach einem der Ansprüche 1 bis 6, wobei die Rechenmaschine (38) so konfiguriert ist, dass alle in den Inferenz- und Gradientenabstiegsberechnungen enthaltenen Multiplikationsoperationen schnelle Multiplikationsoperationen sind.

8. Datenverarbeitungsvorrichtung (32) nach einem der Ansprüche 1 bis 7, wobei die Eingangsdaten (31) Rohdaten sind, die aus Symbolen bestehen, und wobei das mindestens eine Ausgangsdatenelement (34) repräsentativ für eine Vorhersage eines Auftretens der Symbole ist, wobei das mindestens eine Ausgangsdatenelement an ein an Bord des Raumfahrzeugs (30) eingebettetes Modul (35) zur entropischen Kompression der Rohdaten geliefert wird.

9. Datenverarbeitungsvorrichtung (32) nach einem der Ansprüche 1 bis 8, wobei die Rechenmaschine (38) so konfiguriert ist, dass sie gemäß einer ersten Betriebsart arbeitet, die den Lernphasen entspricht, und gemäß einer zweiten Betriebsart, die Inferenzberechnungen ohne Lernen entspricht, wobei schnelle Multiplikationen und schnelle Divisionen in diesen beiden Betriebsarten verwendet werden.

10. Datenverarbeitungsvorrichtung (32) nach einem der Ansprüche 1 bis 9, wobei die Rechenmaschine (38) so konfiguriert ist, dass jeder von einem der Neuronen getragene Wert und jeder Gewichtungsfaktor, der mit einer Übertragung eines Wertes von einem Neuron zum anderen verbunden ist, auf eine gleiche Anzahl an Binärdaten in demselben Format in Form einer Gleitkommazahl kodiert werden.

11. Datenverarbeitungsvorrichtung (32) nach einem der Ansprüche 1 bis 10, wobei das neuronale Netzwerk (33) so konfiguriert ist, dass es durch ein anfängliches Lernen (41) vor dem Starten des Raumfahrzeugs eingestellt wird.

12. Datenverarbeitungssystem (60) für eine Raumanwendung, umfassend eine in einem Raumfahrzeug (30) eingebettete Datenverarbeitungsvorrichtung (32) nach einem der Ansprüche 1 bis 11 und eine Verarbeitungsvorrichtung (82) am Boden in einer Bodenanlage (80), umfassend ein Kommunikationsmittel (87) mit dem Kommunikationsmittel (37) des Raumfahrzeugs (30), wobei die Datenverarbeitungsvorrichtung am Boden eine Rechenmaschine (88) umfasst, die identisch mit der eingebetteten Rechenmaschine (38) ist.

13. Datenverarbeitungssystem (60) nach Anspruch 12, wobei die Rechenmaschine (88) am Boden ferner ein Leistungsbewertungsmodul (89) umfasst, das so konfiguriert ist, dass es einerseits eine Konfiguration des neuronalen Netzwerks am Boden (83) mit einer zu einem bestimmten Datum bestimmten gemessenen Leistung speichert und andererseits die Leistung des neuronalen Netzwerks am Boden misst, die durch Einstellung seiner repräsentativen Daten durch eine Lernphase (42) erhalten wird, und die gespeicherte Leistung mit der gemessenen Leistung vergleicht, wobei die Rechenmaschine so konfiguriert ist, dass sie das neuronale Netzwerk am Boden und das eingebettete neuronale Netzwerk (33) auf die gespeicherte Netzwerkkonfiguration zurücksetzt, wenn die gemessene Leistung der durch eine Lernphase eingestellten Netzwerkkonfiguration niedriger ist als die Leistung der gespeicherten Netzwerkkonfiguration.

14. Verfahren zur Datenverarbeitung an Bord eines Raumfahrzeugs (30), umfassend einen Schritt des Kommunizierens mit einer Bodenvorrichtung und einen Berechnungsschritt, bei dem ein neuronales Netzwerk implementiert wird, das als Eingang Eingangsdaten (31) empfängt und als Ausgang mindestens ein Ausgangsdatenelement (34) erzeugt, wobei das neuronale Netzwerk eine Vielzahl von Schichten (L1 bis L7) umfasst, wobei ein Neuron (11) einer bestimmten Schicht in Abhängigkeit von mindestens einem mit einem Gewicht multiplizierten vorgelagerten Wert bestimmt wird, wobei der Berechnungsschritt auch einen Speicherbereich (323) einsetzt, in dem repräsentative Daten des neuronalen Netzwerks gespeichert sind,
**dadurch gekennzeichnet, dass** die Berechnungen sogenannte "langsame" Multiplikations- und Divisionsoperationen, die eine erste Rechenleistung und eine erste Menge elektrischer Energie verbrauchen, sowie sogenannte "schnelle" deterministische Multiplikations- und Divisionsoperationen umfassen, die eine zweite Rechenleistung, die kleiner ist als die erste Rechenleistung, und/oder eine zweite elektrische Energiemenge, die kleiner ist als die erste elektrische Energiemenge, verbrauchen, wobei das Ergebnis der schnellen Operationen je nach den Zahlen, auf die sich eine schnelle Operation bezieht, eine Genauigkeit besitzt, die kleiner oder gleich der entsprechenden langsamen Operation ist,
**und dass** der Rechenschritt mindestens eine Lernphase (42) des neuronalen Netzwerks umfasst, wobei jede Lernphase eine Einstellung der repräsentativen Daten des neuronalen Netzwerks durch einen iterativen Algorithmus umfasst, der Lerndaten implementiert, wobei jede Iteration (423) des iterativen Algorithmus, die Inferenzberechnungen (421) umfasst, auf die Gradientenabstiegsberechnungen (422) folgen, wobei die Inferenzberechnungen unter Verwendung mindestens eine schnelle deterministische Divisionsoperation verwenden,
wobei der Schritt des Kommunizierens mit der Bodenvorrichtung die Lerndaten an die Bodenvorrichtung überträgt und/oder von der Bodenvorrichtung empfängt,
wobei das Datenverarbeitungsverfahren es einerseits ermöglicht, die für die mindestens eine Lernphase an Bord des Raumfahrzeugs erforderliche Rechenleistung und elektrische Energie einzustellen, und andererseits ermöglicht, in der Bodenvorrichtung ein anderes neuronales Netzwerk zu implementieren, das mit dem eingebetteten neuronalen Netzwerk identisch ist.

## Claims

1. A data processing device (32), onboard a spacecraft (30) and comprising a means for communicating with a device on the ground and a computing machine (38, 321, 322, 323), configured to implement a neural network (100, 120) receiving, at the input, input data (31) and generating, at the output, at least one output data item (34), the neural network comprising a plurality of layers (L1 to L7), a neuron (110) of a given layer being determined according to at least one upstream value multiplied by a weight, the computing machine comprising a processing unit (321) and a memory space (323) storing representative data of the neural network,
**characterized in that** the computing machine is configured to perform so-called "slow" multiplication and division operations, consuming a first computing power and a first quantity of electrical energy, and so-called "fast" deterministic multiplication and division operations, consuming a second computing power less than the first computing power and/or a second quantity of electrical energy less than the first quantity of electrical energy, fast operations for which the result has, according to the numbers covered by a fast operation, a precision less than or equal to the corresponding slow operation,
**and in that** the computing machine is configured to perform at least one learning phase (42) of the neural network, each learning phase comprising an adjustment of the representative data of the neural network with an iterative algorithm implementing training data, each iteration (423) of the iterative algorithm comprising inference computations (421) followed by gradient descent computations (422), said inference computations using at least one fast deterministic division operation,
the means for communicating with the device on the ground being configured to transmit training data to the device on the ground and/or receive training data from the device on the ground,
the data processing device thus making it possible, on the one hand, to adapt the computing power and electrical energy necessary for said at least one learning phase onboard the spacecraft and, on the other hand, to implement, in the device on the ground, another neural network identical to the onboard neural network.

2. The data processing device (32) of claim 1, wherein the computing machine (38) is configured so that the gradient descent computations use fast deterministic multiplication operations and fast deterministic division operations.

3. The data processing device (32) according to one of claims 1 or 2, which further comprises a performance evaluation module (39) configured to, on the one hand, store in memory a configuration of the neural network (33) having a determined measured performance on a determined date and, on the other hand, measure the performance of the neural network obtained by adjusting its representative data with a learning phase (42), and compare the performance stored in memory with the measured performance, the computing machine being configured to return the neural network to the network configuration stored in memory if the measured performance of the network configuration adjusted with a learning phase is less than the performance of the network configuration stored in memory.

4. The data processing device (32) according to one of claims 1 to 3, wherein the computing machine (38) is configured so that each of the fast division operations carried out, for two numbers D and F stored in memory, corresponds to: $\left({S}_{D}\times {S}_{F}\right) \times \left(1+{M}_{D}-{M}_{F}\right) \times {2}^{{E}_{D} - {E}_{F}}$ where S_{D} is the sign of D, S_{F} is the sign of F, M_{D} is the mantissa of D, M_{F} is the mantissa of F, E_{D} is the exponent of D, and E_{F} is the exponent of F, mantissa and exponent being defined in a determined base.

5. The data processing device (32) according to one of claims 1 to 4, wherein the computing machine (38) is configured so that each of the fast multiplication operations carried out, for two numbers A and B stored in memory, corresponds to: $\left({S}_{A}\times {S}_{B}\right) \times \left(1+{M}_{A}+{M}_{B}\right) \times {2}^{{E}_{A} + {E}_{B} ∓ 2 C}$ the two numbers A and B stored in memory being decomposed as follows: $A = {S}_{A} \times \left(1+{M}_{A}\right) \times {2}^{{E}_{A} ∓ C}$ $B = {S}_{B} \times \left(1+{M}_{B}\right) \times {2}^{{E}_{B} ∓ C}$ where S_{A} is the sign of A, S_{B} is the sign of B, M_{A} is the mantissa of A, M_{B} is the mantissa of B, E_{A} is the exponent of A, E_{B} is the exponent of B, and C is a bias used in the decomposition into sign, mantissa and exponent being defined in a determined base.

6. The data processing device (32) according to any one of claims 1 to 5, wherein the computing machine (38) is configured so that all division operations comprised in said inference and gradient descent computations are fast division operations, except the division operations comprised in the execution of the *Softmax* function for a final layer of the neural network.

7. The data processing device (32) according to one of claims 1 to 6, wherein the computing machine (38) is configured so that all multiplication operations comprised in said inference and gradient descent computations are fast multiplication operations.

8. The data processing device (32) according to one of claims 1 to 7, wherein said input data (31) are raw data consisting of symbols and wherein said at least one output data item (34) is representative of a prediction of an occurrence of the symbols, said at least one output data item being supplied to a module (35), implemented onboard the spacecraft (30), for entropic compression of said raw data.

9. The data procession device (32) according to one of claims 1 to 8, wherein the computing machine (38) is configured to operate according to a first operating mode corresponding to the learning phases and according to a second operating mode corresponding to inference computations without learning, fast multiplications and fast divisions being used in these two operating modes.

10. The data processing device (32) according to one of claims 1 to 9, wherein the computing machine (38) is configured so that each value carried by one of the neurons and each weighting factor associated with a transmission of a value from one neuron to another, are encoded on the same number of binary data, in the same format in the form of a floating point number.

11. The data processing device (32) according to any one of claims 1 to 10, wherein the neural network (33) is configured to be adjusted with an initial learning (41) before launching the spacecraft.

12. A data processing system (60) for a space application comprising a data processing device (32) onboard a spacecraft (30) according to one of claims 1 to 11 and a processing device (82) on the ground in an installation (80) on the ground comprising a means (87) for communicating with the communication means (37) of the spacecraft (30), the data processing device on the ground comprising a computing machine (88) identical to the onboard computing machine (38).

13. The data processing system (60) according to claim 12, wherein the computing device (88) on the ground further comprises a performance evaluation module (89) configured to, on the one hand, store in memory a configuration of the neural network (83) on the ground having a determined measured performance on a determined date and, on the other hand, measure the performance of the neural network obtained by adjusting its representative data with a learning phase (42), and compare the performance stored in memory with the measured performance, the computing machine being configured to return the neural network on the ground and the onboard neural network (33) to the network configuration stored in memory if the measured performance of the network configuration adjusted with a learning phase is less than the performance of the network configuration stored in memory.

14. A method for processing data onboard a spacecraft (30) comprising a step of communicating with a device on the ground and a computing step implementing a neural network receiving, at the input, input data (31) and generating, at the output, at least one output data item (34), the neural network comprising a plurality of layers (L1 to L7), a neuron (11) of a given layer being determined according to at least one upstream value multiplied by a weight, the computing step also implementing a memory space (323) storing representative data of the neural network,
**characterized in that** the computations comprise so-called "slow" multiplication and division operations, consuming a first computing power and a first quantity of electrical energy, and so-called "fast" deterministic multiplication and division operations, consuming a second computing power less than the first computing power and/or a second quantity of electrical energy less than the first quantity of electrical energy, fast operations for which the result has, according to the numbers covered by a fast operation, a precision less than or equal to the corresponding slow operation,
**and in that** the computing step comprises at least one learning phase (42) of the neural network, each learning phase comprising an adjustment of the representative data of the neural network with an iterative algorithm implementing training data, each iteration (423) of the iterative algorithm comprising inference computations (421) followed by gradient descent computations (422), said inference computations using at least one fast deterministic division operation,
the step of communicating with the device on the ground transmits training data to the device on the ground and/or receiving training data from the device on the ground,
the data processing method thus making it possible, on the one hand, to adapt the computing power and electrical energy necessary for said at least one learning phase onboard the spacecraft and, on the other hand, to implement, in the device on the ground, another neural network identical to the onboard neural network.
